# EUROPEAN PATENT APPLICATION

(11) **EP 4 072 211 A1**
(43) Date of publication of application: **12.10.2022**
(21) Application number: 19957269.4
(22) Date of filing: 26.12.2019
(51) Int. Cl.: H04W 72/04, H04L 1/00, H04B 7/026, H04W 88/04, H04W 72/12, H04L 5/00

(54) **COMMUNICATION METHOD AND APPARATUS**

(71) Applicant: Huawei Technologies Co., Ltd., Shenzhen, Guangdong 518129 (CN)
(72) Inventor: LIU, Rongkuan, Shenzhen, Guangdong 518129 (CN); WANG, Ting, Shenzhen, Guangdong 518129 (CN); XU, Hua, Shenzhen, Guangdong 518129 (CN); ZHANG, Peng, Shenzhen, Guangdong 518129 (CN)
(74) Representative: Pfenning, Meinig & Partner mbB
(86) International application number: PCT/CN2019/128906
(87) International publication number: WO 2021/128222

(57) **Abstract**

Embodiments of this application relate to the wireless communication field, and provide a communication method, to reduce network overheads while reliability of receiving data by a terminal device is improved. The method includes: A first terminal device receives first resource information from a network device, where the first resource information is used to indicate a resource for downlink data of a second terminal device, and the resource for the downlink data of the second terminal device is included in an overlapping bandwidth part of the first terminal device and the second terminal device. The first terminal device receives the downlink data of the second terminal device from the network device based on the first resource information. The first terminal device sends the downlink data to the second terminal device.

## Description

### TECHNICAL FIELD

Embodiments of this application relate to the wireless communication field, and in particular, to a communication method and apparatus.

### BACKGROUND

Currently, in an existing system, for example, a new radio (new radio, NR) system or another system, before sending data to terminal devices in the system, a network device needs to configure a resource for each of the terminal devices. Subsequently, the network device may send the data of the terminal device to the terminal device on the resource of the terminal device. Correspondingly, the terminal device receives the data of the terminal device from the network device on the resource of the terminal device. For example, the network device may send data 1 to a terminal device 1 on a resource 1, and send data 2 to a terminal device 2 on a resource 2. Accordingly, the terminal device 1 may receive the data 1 from the network device on the resource 1, and the terminal device 2 may receive the data 2 from the network device on the resource 2.

With development of wireless communication technologies, to improve reliability of receiving data by a terminal device, a plurality of terminal devices connected to the network device may cooperate with each other to receive data from the network device. For example, the network device needs to send the data 1 to the terminal device 1, and the terminal device 1 and the terminal device 2 cooperate with each other. The network device may send the data 1 to the terminal device 1 on the resource 1, and send the data 1 to the terminal device 2 on the resource 2. The terminal device 2 receives the data 1 from the network device on the resource 2, and sends the data 1 to the terminal device 1 on a resource 3. The terminal device 1 receives the data 1 from the network device on the resource 1, and receives the data 1 from the terminal device 2 on the resource 3. In this way, the terminal device 1 receives the data 1 from the network device and the terminal device 2. Therefore, compared with a case in which the terminal device 1 receives the data 1 only from the network device, this case can improve reliability of receiving the data 1 by the terminal device 1. However, in the foregoing example, the network device needs to send the data 1 to each terminal device. Consequently, network overheads are high when there are a large quantity of terminal devices cooperating with each other.

### SUMMARY

Embodiments of this application provide a communication method and device, to reduce network overheads while reliability of receiving data by a terminal device is improved.

To achieve the foregoing objective, the following technical solutions are used in embodiments of this application.

According to a first aspect, an embodiment of this application provides a communication method. The method includes: A first terminal device receives first resource information from a network device, where the first resource information is used to indicate a resource for downlink data of a second terminal device, and the resource for the downlink data of the second terminal device is included in an overlapping bandwidth part of the first terminal device and the second terminal device. The first terminal device receives the downlink data of the second terminal device from the network device based on the first resource information. The first terminal device sends the downlink data to the second terminal device.

According to the method provided in the first aspect, the first terminal device may receive, from the network device, the first resource information used to indicate the resource for the downlink data of the second terminal device, receive the downlink data of the second terminal device from the network device based on the first resource information, and forward the downlink data of the second terminal device to the second terminal device. In this way, in addition to receiving the downlink data of the second terminal device from the network device, the second terminal device may further receive the downlink data of the second terminal device from the first terminal device, so that reliability of receiving the data by the second terminal device can be improved. In addition, the first terminal device receives the downlink data of the second terminal device from the network device based on the first resource information. In other words, the first terminal device learns of a resource on which the network device sends the downlink data of the second terminal device to the second terminal device, and the first terminal device also receives the downlink data of the second terminal device from the network device on the resource indicated by the first resource information. Therefore, when the network device sends the downlink data of the second terminal device once, both the first terminal device and the second terminal device can receive the downlink data of the second terminal device. This reduces power overheads of the network device, reduces resource overheads of data transmission, and improves downlink cooperative transmission efficiency.

In a possible implementation, the first terminal device receives first configuration information from the network device, where the first configuration information is used to indicate a resource for downlink control information of the second terminal device. That a first terminal device receives first resource information from a network device includes: The first terminal device receives first resource information of the second terminal device from the network device on the resource for the downlink control information of the second terminal device, where the first resource information includes the downlink control information of the second terminal device. Based on the foregoing method, the first terminal device may receive, from the network device, the first configuration information used to indicate the resource for the downlink control information of the second terminal device. Therefore, the first terminal device may receive the first resource information of the second terminal device from the network device on the resource for the downlink control information of the second terminal device, so that the first terminal device receives the downlink data of the second terminal device based on the first resource information. In this way, when the network device sends the downlink control information of the second terminal device once, both the first terminal device and the second terminal device can receive the downlink control information of the second terminal device. This reduces the power overheads of the network device, and reduces resource overheads of control information transmission.

In a possible implementation, the first terminal device receives second configuration information from the network device, where the second configuration information is used to indicate a resource for downlink control information of the first terminal device, and the resource for the downlink control information of the first terminal device overlaps with the resource for the downlink control information of the second terminal device. That the first terminal device receives first resource information of the second terminal device from the network device on the resource for the downlink control information of the second terminal device includes: The first terminal device receives the first resource information from the network device on an overlapping resource of the resource for the downlink control information of the second terminal device and the downlink control information of the first terminal device. Based on the foregoing method, the first terminal device may receive, from the network device, the second configuration information used to indicate the resource for the downlink control information of the first terminal device, so that the first terminal device learns of the overlapping resource of the resource for the downlink control information of the second terminal device and the downlink control information of the first terminal device, and receives the first resource information from the network device on the overlapping resource. In this way, when the network device sends the downlink control information of the second terminal device once, both the first terminal device and the second terminal device can receive the downlink control information of the second terminal device. This reduces the power overheads of the network device, and reduces the resource overheads of the control information transmission.

In a possible implementation, the second configuration information includes a configuration of a bandwidth part of the first terminal device; and the first configuration information includes a first offset and a configuration of a control resource set of the second terminal device, where the first offset is used to indicate an offset of a configuration of a bandwidth part of the second terminal device relative to the configuration of the bandwidth part of the first terminal device. Based on the foregoing method, the first terminal device may determine, based on the configuration of the bandwidth part of the first terminal device, the offset of the configuration of the bandwidth part of the second terminal device relative to the configuration of the bandwidth part of the first terminal device, and the configuration of the control resource set of the second terminal device, the overlapping resource of the resource for the downlink control information of the second terminal device and the downlink control information of the first terminal device, so that the first terminal device receives the first resource information from the network device on the overlapping resource of the resource for the downlink control information of the second terminal device and the downlink control information of the first terminal device. In this way, when the network device sends the downlink control information of the second terminal device once, both the first terminal device and the second terminal device can receive the downlink control information of the second terminal device. This reduces the power overheads of the network device, and reduces the resource overheads of the control information transmission.

In a possible implementation, the first configuration information includes a configuration of a bandwidth part of the second terminal device and a configuration of a control resource set of the second terminal device. Based on the foregoing method, the first terminal device may learn of the resource for the downlink control information of the second terminal device based on the first configuration information including the configuration of the bandwidth part of the second terminal device and the configuration of the control resource set of the second terminal device, so that the first terminal device receives the first resource information from the network device on the resource for the downlink control information of the second terminal device. In this way, when the network device sends the downlink control information of the second terminal device once, both the first terminal device and the second terminal device can receive the downlink control information of the second terminal device. This reduces the power overheads of the network device, and reduces the resource overheads of the control information transmission.

In a possible implementation, the first terminal device receives second configuration information from the network device, where the second configuration information is used to indicate a resource for downlink control information of the first terminal device. That a first terminal device receives first resource information from a network device includes: The first terminal device receives the first resource information from the network device on the resource for the downlink control information of the first terminal device, where the first resource information includes the downlink control information of the first terminal device, and the downlink control information of the first terminal device is used to indicate the resource for the downlink data of the second terminal device. Based on the foregoing method, the first terminal device may receive, from the network device on the resource that is for the downlink control information of the first terminal device and that is indicated by the second configuration information, the first resource information used to indicate the resource for the downlink data of the second terminal device, so that the first terminal device receives the downlink data of the second terminal device from the network device on the resource for the downlink data of the second terminal device. In this way, when the network device sends the downlink data of the second terminal device once, both the first terminal device and the second terminal device can receive the downlink data of the second terminal device. This reduces the power overheads of the network device, and reduces the resource overheads of the data transmission.

In a possible implementation, the resource for the downlink control information of the first terminal device does not overlap with a resource for a downlink control information of the second terminal device. Based on the foregoing method, when the resource for the downlink control information of the first terminal device does not overlap with the resource for the downlink control information of the second terminal device, the first terminal device may receive, from the network device on the resource for the downlink control information of the first terminal device, the first resource information used to indicate the resource for the downlink data of the second terminal device, so that the first terminal device receives the downlink data of the second terminal device from the network device on the resource for the downlink data of the second terminal device. In this way, when the network device sends the downlink data of the second terminal device once, both the first terminal device and the second terminal device can receive the downlink data of the second terminal device. This reduces the power overheads of the network device, and reduces the resource overheads of the data transmission.

In a possible implementation, the first terminal device receives a group identifier from the network device, where the group identifier is used to descramble the downlink control information received by the first terminal device. That the first terminal device sends the downlink data to the second terminal device includes: The first terminal device sends the downlink data to the second terminal device if the first terminal device successfully descrambles the downlink control information of the second terminal device based on the group identifier. Based on the foregoing method, the first terminal device may receive, from the network device, the group identifier used to descramble the downlink control information received by the first terminal device, and the first terminal device can learn, based on the group identifier, whether the first terminal device sends the received downlink data to the second terminal device. For example, after successfully descrambling the downlink control information of the second terminal device based on the group identifier, the first terminal device may send the downlink data to the second terminal device.

According to a second aspect, an embodiment of this application provides a communication method. The method includes: A second terminal device receives first resource information from a network device, where the first resource information is used to indicate a resource for downlink data of the second terminal device, and the resource for the downlink data of the second terminal device is included in an overlapping bandwidth part of a first terminal device and the second terminal device. The second terminal device receives the downlink data of the second terminal device from the network device based on the first resource information. The second terminal device receives the downlink data from the first terminal device.

According to the method provided in the second aspect, the second terminal device may receive, from the network device, the first resource information used to indicate the resource for the downlink data of the second terminal device, receive the downlink data of the second terminal device from the network device based on the first resource information, and receive the downlink data of the first terminal device from the network device. In this way, in addition to receiving the downlink data of the second terminal device from the network device, the second terminal device may further receive the downlink data of the second terminal device from the first terminal device, so that reliability of receiving the data by the second terminal device can be improved. In addition, the resource for the downlink data of the second terminal device is included in the overlapping bandwidth part of the first terminal device and the second terminal device. Therefore, when the network device sends the downlink data of the second terminal device once, both the first terminal device and the second terminal device can receive the downlink data of the second terminal device. This reduces power overheads of the network device, reduces resource overheads of data transmission, and improves downlink cooperative transmission efficiency.

In a possible implementation, the second terminal device receives first configuration information from the network device, where the first configuration information is used to indicate a resource for downlink control information of the second terminal device. That a second terminal device receives first resource information from a network device includes: The second terminal device receives the first resource information from the network device on the resource for the downlink control information of the second terminal device, where the first resource information includes the downlink control information of the second terminal device. Based on the foregoing method, the second terminal device may receive, from the network device, the first configuration information used to indicate the resource for the downlink control information of the second terminal device. In this way, the second terminal device may receive the downlink control information of the second terminal device from the network device on the resource for the downlink control information of the second terminal device.

According to a third aspect, an embodiment of this application provides a communication method. The method includes: A network device sends first resource information to a first terminal device and a second terminal device, where the first resource information is used to indicate a resource for downlink data of the second terminal device, and the resource for the downlink data of the second terminal device is included in an overlapping bandwidth part of the first terminal device and the second terminal device. The network device sends the downlink data of the second terminal device to the first terminal device and the second terminal device based on the first resource information.

According to the method provided in the third aspect, the network device may send, to the first terminal device and the second terminal device, the first resource information used to indicate the resource for the downlink data of the second terminal device, and send the downlink data of the second terminal device to the first terminal device and the second terminal device based on the first resource information. In this way, when the network device sends the downlink data of the second terminal device once, both the first terminal device and the second terminal device can receive the downlink data of the second terminal device. This reduces power overheads of the network device, reduces resource overheads of data transmission, and improves downlink cooperative transmission efficiency.

In a possible implementation, the network device sends first configuration information to the first terminal device and the second terminal device, where the first configuration information is used to indicate a resource for downlink control information of the second terminal device. That a network device sends first resource information to a first terminal device and a second terminal device includes: The network device sends the first resource information to the first terminal device and the second terminal device on the resource for the downlink control information of the second terminal device, where the first resource information includes the downlink control information of the second terminal device. Based on the foregoing method, the network device may send, to the first terminal device and the second terminal device, the first configuration information used to indicate the resource for the downlink control information of the second terminal device, so that the first terminal device and the second terminal device receive the downlink control information of the second terminal device from the network device on the resource for the downlink control information of the second terminal device. In this way, when the network device sends the downlink control information of the second terminal device once, both the first terminal device and the second terminal device can receive the downlink control information of the second terminal device. This reduces the power overheads of the network device, and reduces resource overheads of control information transmission.

In a possible implementation, the network device sends second configuration information to the first terminal device, where the second configuration information is used to indicate a resource for downlink control information of the first terminal device, and the resource for the downlink control information of the first terminal device overlaps with the resource for the downlink control information of the second terminal device. That the network device sends the first resource information to the first terminal device and the second terminal device on the resource for the downlink control information of the second terminal device includes: The network device sends the first resource information to the first terminal device and the second terminal device on an overlapping resource of the resource for the downlink control information of the second terminal device and the downlink control information of the first terminal device. Based on the foregoing method, the network device may send, to the first terminal device, the second configuration information used to indicate the resource for the downlink control information of the first terminal device, so that the first terminal device learns of the overlapping resource of the resource for the downlink control information of the second terminal device and the downlink control information of the first terminal device, and receives the first resource information from the network device on the overlapping resource. In this way, when the network device sends the downlink control information of the second terminal device once, both the first terminal device and the second terminal device can receive the downlink control information of the second terminal device. This reduces the power overheads of the network device, and reduces the resource overheads of the control information transmission.

In a possible implementation, the second configuration information includes a configuration of a bandwidth part of the first terminal device; and the first configuration information includes a first offset and a configuration of a control resource set of the second terminal device, where the first offset is used to indicate an offset of a configuration of a bandwidth part of the second terminal device relative to the configuration of the bandwidth part of the first terminal device. Based on the foregoing method, the network device may indicate, to the first terminal device based on the configuration of the bandwidth part of the first terminal device, the offset of the configuration of the bandwidth part of the second terminal device relative to the configuration of the bandwidth part of the first terminal device, and the configuration of the control resource set of the second terminal device, the overlapping resource of the resource for the downlink control information of the second terminal device and the downlink control information of the first terminal device, so that the first terminal device receives the first resource information from the network device on the overlapping resource of the resource for the downlink control information of the second terminal device and the downlink control information of the first terminal device. In this way, when the network device sends the downlink control information of the second terminal device once, both the first terminal device and the second terminal device can receive the downlink control information of the second terminal device. This reduces the power overheads of the network device, and reduces the resource overheads of the control information transmission.

In a possible implementation, the first configuration information includes a configuration of a bandwidth part of the second terminal device and a configuration of a control resource set of the second terminal device. Based on the foregoing method, the network device may indicate the resource for the downlink control information of the second terminal device to the first terminal device based on the first configuration information including the configuration of the bandwidth part of the second terminal device and the configuration of the control resource set of the second terminal device, so that the first terminal device receives the first resource information from the network device on the resource for the downlink control information of the second terminal device. In this way, when the network device sends the downlink control information of the second terminal device once, both the first terminal device and the second terminal device can receive the downlink control information of the second terminal device. This reduces the power overheads of the network device, and reduces the resource overheads of the control information transmission.

In a possible implementation, the network device sends second configuration information to the first terminal device, where the second configuration information is used to indicate a resource for downlink control information of the first terminal device. That a network device sends first resource information to a first terminal device includes: The network device sends the first resource information to the first terminal device on the resource for the downlink control information of the first terminal device, where the first resource information includes the downlink control information of the first terminal device, and the downlink control information of the first terminal device is used to indicate the resource for the downlink data of the second terminal device. Based on the foregoing method, the network device may send, to the first terminal device on the resource that is for the downlink control information of the first terminal device and that is indicated by the second configuration information, the first resource information used to indicate the resource for the downlink data of the second terminal device, so that the first terminal device receives the downlink data of the second terminal device from the network device on the resource for the downlink data of the second terminal device. In this way, when the network device sends the downlink data of the second terminal device once, both the first terminal device and the second terminal device can receive the downlink data of the second terminal device. This reduces the power overheads of the network device, and reduces the resource overheads of the data transmission.

In a possible implementation, the network device sends first configuration information to the second terminal device, where the first configuration information is used to indicate a resource for downlink control information of the second terminal device. That a network device sends first resource information to a second terminal device includes: The network device sends the first resource information to the second terminal device on the resource for the downlink control information of the second terminal device, where the first resource information includes the downlink control information of the second terminal device. Based on the foregoing method, the network device may send, to the second terminal device, the first configuration information used to indicate the resource for the downlink control information of the second terminal device, so that the second terminal device receives the downlink control information of the second terminal device from the network device on the resource for the downlink control information of the second terminal device.

In a possible implementation, the resource for the downlink control information of the first terminal device does not overlap with the resource for the downlink control information of the second terminal device. Based on the foregoing method, when the resource for the downlink control information of the first terminal device does not overlap with the resource for the downlink control information of the second terminal device, the network device may send, to the first terminal device on the resource for the downlink control information of the first terminal device, the first resource information used to indicate the resource for the downlink data of the second terminal device, so that the first terminal device receives the downlink data of the second terminal device from the network device on the resource for the downlink data of the second terminal device. In this way, when the network device sends the downlink data of the second terminal device once, both the first terminal device and the second terminal device can receive the downlink data of the second terminal device. This reduces the power overheads of the network device, and reduces the resource overheads of the data transmission.

In a possible implementation, the network device sends a group identifier to the first terminal device, where the group identifier is used to descramble the downlink control information received by the first terminal device. Based on the foregoing method, the network device may send, to the first terminal device, the group identifier used to descramble the downlink control information received by the first terminal device, so that the first terminal device can learn, based on the group identifier, whether the first terminal device sends the received downlink data to the second terminal device.

According to a fourth aspect, an embodiment of this application provides a communication apparatus. The communication apparatus includes a receiving module and a sending module. The receiving module is configured to receive first resource information from a network device, where the first resource information is used to indicate a resource for downlink data of a second terminal device, and the resource for the downlink data of the second terminal device is included in an overlapping bandwidth part of the communication apparatus and the second terminal device. The receiving module is further configured to receive the downlink data of the second terminal device from the network device based on the first resource information. The sending module is configured to send the downlink data to the second terminal device.

According to the communication apparatus provided in the fourth aspect, the communication apparatus may receive, from the network device, the first resource information used to indicate the resource for the downlink data of the second terminal device, receive the downlink data of the second terminal device from the network device based on the first resource information, and forward the downlink data of the second terminal device to the second terminal device. In this way, in addition to receiving the downlink data of the second terminal device from the network device, the second terminal device may further receive the downlink data of the second terminal device from the communication apparatus, so that reliability of receiving the data by the second terminal device can be improved. In addition, the communication apparatus receives the downlink data of the second terminal device from the network device based on the first resource information. In other words, the communication apparatus learns of a resource on which the network device sends the downlink data of the second terminal device to the second terminal device, and the communication apparatus also receives the downlink data of the second terminal device from the network device on the resource indicated by the first resource information. Therefore, when the network device sends the downlink data of the second terminal device once, both the communication apparatus and the second terminal device can receive the downlink data of the second terminal device. This reduces power overheads of the network device, reduces resource overheads of data transmission, and improves downlink cooperative transmission efficiency.

In a possible implementation, the receiving module is further configured to receive first configuration information from the network device, where the first configuration information is used to indicate a resource for downlink control information of the second terminal device. The receiving module is specifically configured to receive first resource information of the second terminal device from the network device on the resource for the downlink control information of the second terminal device, where the first resource information includes the downlink control information of the second terminal device. Based on the foregoing communication apparatus, the communication apparatus may receive, from the network device, the first configuration information used to indicate the resource for the downlink control information of the second terminal device. Therefore, the communication apparatus may receive the first resource information of the second terminal device from the network device on the resource for the downlink control information of the second terminal device, so that the communication apparatus receives the downlink data of the second terminal device based on the first resource information. In this way, when the network device sends the downlink control information of the second terminal device once, both the communication apparatus and the second terminal device can receive the downlink control information of the second terminal device. This reduces the power overheads of the network device, and reduces resource overheads of control information transmission.

In a possible implementation, the receiving module is further configured to receive second configuration information from the network device, where the second configuration information is used to indicate a resource for downlink control information of the communication apparatus, and the resource for the downlink control information of the communication apparatus overlaps with the resource for the downlink control information of the second terminal device. The receiving module is further specifically configured to receive the first resource information from the network device on an overlapping resource of the resource for the downlink control information of the second terminal device and the downlink control information of the communication apparatus. Based on the foregoing communication apparatus, the communication apparatus may receive, from the network device, the second configuration information used to indicate the resource for the downlink control information of the communication apparatus, so that the communication apparatus learns of the overlapping resource of the resource for the downlink control information of the second terminal device and the downlink control information of the communication apparatus, and receives the first resource information from the network device on the overlapping resource. In this way, when the network device sends the downlink control information of the second terminal device once, both the communication apparatus and the second terminal device can receive the downlink control information of the second terminal device. This reduces the power overheads of the network device, and reduces the resource overheads of the control information transmission.

In a possible implementation, the second configuration information includes a configuration of a bandwidth part of the communication apparatus; and the first configuration information includes a first offset and a configuration of a control resource set of the second terminal device, where the first offset is used to indicate an offset of a configuration of a bandwidth part of the second terminal device relative to the configuration of the bandwidth part of the communication apparatus. Based on the foregoing communication apparatus, the communication apparatus may determine, based on the configuration of the bandwidth part of the communication apparatus, the offset of the configuration of the bandwidth part of the second terminal device relative to the configuration of the bandwidth part of the communication apparatus, and the configuration of the control resource set of the second terminal device, the overlapping resource of the resource for the downlink control information of the second terminal device and the downlink control information of the communication apparatus, so that the communication apparatus receives the first resource information from the network device on the overlapping resource of the resource for the downlink control information of the second terminal device and the downlink control information of the communication apparatus. In this way, when the network device sends the downlink control information of the second terminal device once, both the communication apparatus and the second terminal device can receive the downlink control information of the second terminal device. This reduces the power overheads of the network device, and reduces the resource overheads of the control information transmission.

In a possible implementation, the first configuration information includes a configuration of a bandwidth part of the second terminal device and a configuration of a control resource set of the second terminal device. Based on the foregoing communication apparatus, the communication apparatus may learn of the resource for the downlink control information of the second terminal device based on the first configuration information including the configuration of the bandwidth part of the second terminal device and the configuration of the control resource set of the second terminal device, so that the communication apparatus receives the first resource information from the network device on the resource for the downlink control information of the second terminal device. In this way, when the network device sends the downlink control information of the second terminal device once, both the communication apparatus and the second terminal device can receive the downlink control information of the second terminal device. This reduces the power overheads of the network device, and reduces the resource overheads of the control information transmission.

In a possible implementation, the receiving module is further configured to receive second configuration information from the network device, where the second configuration information is used to indicate a resource for downlink control information of the communication apparatus. The receiving module is further specifically configured to receive the first resource information from the network device on the resource for the downlink control information of the communication apparatus, where the first resource information includes the downlink control information of the communication apparatus, and the downlink control information of the communication apparatus is used to indicate the resource for the downlink data of the second terminal device. Based on the foregoing communication apparatus, the communication apparatus may receive, from the network device on the resource that is for the downlink control information of the communication apparatus and that is indicated by the second configuration information, the first resource information used to indicate the resource for the downlink data of the second terminal device, so that the communication apparatus receives the downlink data of the second terminal device from the network device on the resource for the downlink data of the second terminal device. In this way, when the network device sends the downlink data of the second terminal device once, both the communication apparatus and the second terminal device can receive the downlink data of the second terminal device. This reduces the power overheads of the network device, and reduces the resource overheads of the data transmission.

In a possible implementation, the resource for the downlink control information of the communication apparatus does not overlap with a resource for a downlink control information of the second terminal device. Based on the foregoing communication apparatus, when the resource for the downlink control information of the communication apparatus does not overlap with the resource for the downlink control information of the second terminal device, the communication apparatus may receive, from the network device on the resource for the downlink control information of the communication apparatus, the first resource information used to indicate the resource for the downlink data of the second terminal device, so that the communication apparatus receives the downlink data of the second terminal device from the network device on the resource for the downlink data of the second terminal device. In this way, when the network device sends the downlink data of the second terminal device once, both the communication apparatus and the second terminal device can receive the downlink data of the second terminal device. This reduces the power overheads of the network device, and reduces the resource overheads of the data transmission.

In a possible implementation, the receiving module is further configured to receive a group identifier from the network device, where the group identifier is used to descramble the downlink control information received by the communication apparatus. The sending module is specifically configured to send the downlink data to the second terminal device if the communication apparatus successfully descrambles the downlink control information of the second terminal device based on the group identifier. Based on the foregoing communication apparatus, the communication apparatus may receive, from the network device, the group identifier used to descramble the downlink control information received by the communication apparatus, and the communication apparatus can learn, based on the group identifier, whether the communication apparatus sends the received downlink data to the second terminal device. For example, after successfully descrambling the downlink control information of the second terminal device based on the group identifier, the communication apparatus may send the downlink data to the second terminal device.

According to a fifth aspect, an embodiment of this application provides a communication apparatus. The communication apparatus includes a receiving module. The receiving module is configured to receive first resource information from a network device, where the first resource information is used to indicate a resource for downlink data of the communication apparatus, and the resource for the downlink data of the communication apparatus is included in an overlapping bandwidth part of a first terminal device and the communication apparatus. The receiving module is further configured to receive the downlink data of the communication apparatus from the network device based on the first resource information. The receiving module is further configured to receive the downlink data from the first terminal device.

According to the communication apparatus provided in the fifth aspect, the communication apparatus may receive, from the network device, the first resource information used to indicate the resource for the downlink data of the communication apparatus, receive the downlink data of the communication apparatus from the network device based on the first resource information, and receive the downlink data of the first terminal device from the network device. In this way, in addition to receiving the downlink data of the communication apparatus from the network device, the communication apparatus may further receive the downlink data of the communication apparatus from the first terminal device, so that reliability of receiving the data by the communication apparatus can be improved. In addition, the resource for the downlink data of the communication apparatus is included in the overlapping bandwidth part of the first terminal device and the communication apparatus. Therefore, when the network device sends the downlink data of the communication apparatus once, both the first terminal device and the communication apparatus can receive the downlink data of the communication apparatus. This reduces power overheads of the network device, reduces resource overheads of data transmission, and improves downlink cooperative transmission efficiency.

In a possible implementation, the receiving module is further configured to receive first configuration information from the network device, where the first configuration information is used to indicate a resource for downlink control information of the communication apparatus. The receiving module is specifically configured to receive the first resource information from the network device on the resource for the downlink control information of the communication apparatus, where the first resource information includes the downlink control information of the communication apparatus. Based on the foregoing communication apparatus, the communication apparatus may receive, from the network device, the first configuration information used to indicate the resource for the downlink control information of the communication apparatus. In this way, the communication apparatus may receive the downlink control information of the communication apparatus from the network device on the resource for the downlink control information of the communication apparatus.

According to a sixth aspect, an embodiment of this application provides a communication apparatus. The communication apparatus includes a sending module. The sending module is configured to send first resource information to a first terminal device and a second terminal device, where the first resource information is used to indicate a resource for downlink data of the second terminal device, and the resource for the downlink data of the second terminal device is included in an overlapping bandwidth part of the first terminal device and the second terminal device. The sending module is further configured to send the downlink data of the second terminal device to the first terminal device and the second terminal device based on the first resource information.

According to the communication apparatus provided in the sixth aspect, the communication apparatus may send, to the first terminal device and the second terminal device, the first resource information used to indicate the resource for the downlink data of the second terminal device, and send the downlink data of the second terminal device to the first terminal device and the second terminal device based on the first resource information. In this way, when the communication apparatus sends the downlink data of the second terminal device once, both the first terminal device and the second terminal device can receive the downlink data of the second terminal device. This reduces power overheads of the communication apparatus, reduces resource overheads of data transmission, and improves downlink cooperative transmission efficiency.

In a possible implementation, the sending module is further configured to send first configuration information to the first terminal device and the second terminal device, where the first configuration information is used to indicate a resource for downlink control information of the second terminal device. The sending module is specifically configured to send the first resource information to the first terminal device and the second terminal device on the resource for the downlink control information of the second terminal device, where the first resource information includes the downlink control information of the second terminal device. Based on the foregoing communication apparatus, the communication apparatus may send, to the first terminal device and the second terminal device, the first configuration information used to indicate the resource for the downlink control information of the second terminal device, so that the first terminal device and the second terminal device receive the downlink control information of the second terminal device from the communication apparatus on the resource for the downlink control information of the second terminal device. In this way, when the communication apparatus sends the downlink control information of the second terminal device once, both the first terminal device and the second terminal device can receive the downlink control information of the second terminal device. This reduces the power overheads of the communication apparatus, and reduces resource overheads of control information transmission.

In a possible implementation, the sending module is further configured to send second configuration information to the first terminal device, where the second configuration information is used to indicate a resource for downlink control information of the first terminal device, and the resource for the downlink control information of the first terminal device overlaps with the resource for the downlink control information of the second terminal device. The sending module is further specifically configured to send the first resource information to the first terminal device and the second terminal device on an overlapping resource of the resource for the downlink control information of the second terminal device and the downlink control information of the first terminal device. Based on the foregoing communication apparatus, the communication apparatus may send, to the first terminal device, the second configuration information used to indicate the resource for the downlink control information of the first terminal device, so that the first terminal device learns of the overlapping resource of the resource for the downlink control information of the second terminal device and the downlink control information of the first terminal device, and receives the first resource information from the communication apparatus on the overlapping resource. In this way, when the communication apparatus sends the downlink control information of the second terminal device once, both the first terminal device and the second terminal device can receive the downlink control information of the second terminal device. This reduces the power overheads of the communication apparatus, and reduces the resource overheads of the control information transmission.

In a possible implementation, the second configuration information includes a configuration of a bandwidth part of the first terminal device; and the first configuration information includes a first offset and a configuration of a control resource set of the second terminal device, where the first offset is used to indicate an offset of a configuration of a bandwidth part of the second terminal device relative to the configuration of the bandwidth part of the first terminal device. Based on the foregoing communication apparatus, the communication apparatus may indicate, to the first terminal device based on the configuration of the bandwidth part of the first terminal device, the offset of the configuration of the bandwidth part of the second terminal device relative to the configuration of the bandwidth part of the first terminal device, and the configuration of the control resource set of the second terminal device, the overlapping resource of the resource for the downlink control information of the second terminal device and the downlink control information of the first terminal device, so that the first terminal device receives the first resource information from the communication apparatus on the overlapping resource of the resource for the downlink control information of the second terminal device and the downlink control information of the first terminal device. In this way, when the communication apparatus sends the downlink control information of the second terminal device once, both the first terminal device and the second terminal device can receive the downlink control information of the second terminal device. This reduces the power overheads of the communication apparatus, and reduces the resource overheads of the control information transmission.

In a possible implementation, the first configuration information includes a configuration of a bandwidth part of the second terminal device and a configuration of a control resource set of the second terminal device. Based on the foregoing communication apparatus, the communication apparatus may indicate the resource for the downlink control information of the second terminal device to the first terminal device based on the first configuration information including the configuration of the bandwidth part of the second terminal device and the configuration of the control resource set of the second terminal device, so that the first terminal device receives the first resource information from the communication apparatus on the resource for the downlink control information of the second terminal device. In this way, when the communication apparatus sends the downlink control information of the second terminal device once, both the first terminal device and the second terminal device can receive the downlink control information of the second terminal device. This reduces the power overheads of the communication apparatus, and reduces the resource overheads of the control information transmission.

In a possible implementation, the sending module is further configured to send second configuration information to the first terminal device, where the second configuration information is used to indicate a resource for downlink control information of the first terminal device. The sending module is further specifically configured to send the first resource information to the first terminal device on the resource for the downlink control information of the first terminal device, where the first resource information includes the downlink control information of the first terminal device, and the downlink control information of the first terminal device is used to indicate the resource for the downlink data of the second terminal device. Based on the foregoing communication apparatus, the communication apparatus may send, to the first terminal device on the resource that is for the downlink control information of the first terminal device and that is indicated by the second configuration information, the first resource information used to indicate the resource for the downlink data of the second terminal device, so that the first terminal device receives the downlink data of the second terminal device from the communication apparatus on the resource for the downlink data of the second terminal device. In this way, when the communication apparatus sends the downlink data of the second terminal device once, both the first terminal device and the second terminal device can receive the downlink data of the second terminal device. This reduces the power overheads of the communication apparatus, and reduces the resource overheads of the data transmission.

In a possible implementation, the sending module is further configured to send first configuration information to the second terminal device, where the first configuration information is used to indicate a resource for downlink control information of the second terminal device. The sending module is further specifically configured to send the first resource information to the second terminal device on the resource for the downlink control information of the second terminal device, where the first resource information includes the downlink control information of the second terminal device. Based on the foregoing communication apparatus, the communication apparatus may send, to the second terminal device, the first configuration information used to indicate the resource for the downlink control information of the second terminal device, so that the second terminal device receives the downlink control information of the second terminal device from the network device on the resource for the downlink control information of the second terminal device.

In a possible implementation, the resource for the downlink control information of the first terminal device does not overlap with the resource for the downlink control information of the second terminal device. Based on the foregoing communication apparatus, when the resource for the downlink control information of the first terminal device does not overlap with the resource for the downlink control information of the second terminal device, the communication apparatus may send, to the first terminal device on the resource for the downlink control information of the first terminal device, the first resource information used to indicate the resource for the downlink data of the second terminal device, so that the first terminal device receives the downlink data of the second terminal device from the communication apparatus on the resource for the downlink data of the second terminal device. In this way, when the communication apparatus sends the downlink data of the second terminal device once, both the first terminal device and the second terminal device can receive the downlink data of the second terminal device. This reduces the power overheads of the communication apparatus, and reduces the resource overheads of the data transmission.

In a possible implementation, the sending module is further configured to send a group identifier to the first terminal device, where the group identifier is used to descramble the downlink control information received by the first terminal device. Based on the foregoing communication apparatus, the communication apparatus may send, to the first terminal device, the group identifier used to descramble the downlink control information received by the first terminal device, so that the first terminal device can learn, based on the group identifier, whether the first terminal device sends the received downlink data to the second terminal device.

According to a seventh aspect, an embodiment of this application provides a communication apparatus, including a processor. The processor is coupled to a memory. The memory is configured to store a program or instructions. When the program or the instructions is or are executed by the processor, the apparatus is enabled to implement the method according to any one of the first aspect or the possible implementations of the first aspect.

According to an eighth aspect, an embodiment of this application provides a communication apparatus, including a processor. The processor is coupled to a memory. The memory is configured to store a program or instructions. When the program or the instructions is or are executed by the processor, the apparatus is enabled to implement the method according to any one of the second aspect or the possible implementations of the second aspect.

According to a ninth aspect, an embodiment of this application provides a communication apparatus, including a processor. The processor is coupled to a memory. The memory is configured to store a program or instructions. When the program or the instructions is or are executed by the processor, the apparatus is enabled to implement the method according to any one of the third aspect or the possible implementations of the third aspect.

According to a tenth aspect, an embodiment of this application provides a communication apparatus. The apparatus is configured to implement the method according to any one of the first aspect or the possible implementations of the first aspect.

According to an eleventh aspect, an embodiment of this application provides a communication apparatus. The apparatus is configured to implement the method according to any one of the second aspect or the possible implementations of the second aspect.

According to a twelfth aspect, an embodiment of this application provides a communication apparatus. The apparatus is configured to implement the method according to any one of the third aspect or the possible implementations of the third aspect.

According to a thirteenth aspect, an embodiment of this application provides a computer-readable medium. The computer-readable medium stores a computer program or instructions. When the computer program or the instructions are executed, a computer is enabled to perform the method according to any one of the first aspect or the possible implementations of the first aspect.

According to a fourteenth aspect, an embodiment of this application provides a computer-readable medium. The computer-readable medium stores a computer program or instructions. When the computer program or the instructions are executed, a computer is enabled to perform the method according to any one of the second aspect or the possible implementations of the second aspect.

According to a fifteenth aspect, an embodiment of this application provides a computer-readable medium. The computer-readable medium stores a computer program or instructions. When the computer program or the instructions are executed, a computer is enabled to perform the method according to any one of the third aspect or the possible implementations of the third aspect.

According to a sixteenth aspect, an embodiment of this application provides a computer program product. The computer program product includes computer program code. When the computer program code is run on a computer, the computer is enabled to perform the method according to any one of the first aspect or the possible implementations of the first aspect.

According to a seventeenth aspect, an embodiment of this application provides a computer program product. The computer program product includes computer program code. When the computer program code is run on a computer, the computer is enabled to perform the method according to any one of the second aspect or the possible implementations of the second aspect.

According to an eighteenth aspect, an embodiment of this application provides a computer program product. The computer program product includes computer program code. When the computer program code is run on a computer, the computer is enabled to perform the method according to any one of the third aspect or the possible implementations of the third aspect.

According to a nineteenth aspect, an embodiment of this application provides a chip, including a processor. The processor is coupled to a memory. The memory is configured to store a program or instructions. When the program or the instructions is or are executed by the processor, the chip is enabled to implement the method according to any one of the first aspect or the possible implementations of the first aspect.

According to a twentieth aspect, an embodiment of this application provides a chip, including a processor. The processor is coupled to a memory. The memory is configured to store a program or instructions. When the program or the instructions is or are executed by the processor, the chip is enabled to implement the method according to any one of the second aspect or the possible implementations of the second aspect.

According to a twenty-first aspect, an embodiment of this application provides a chip, including a processor. The processor is coupled to a memory. The memory is configured to store a program or instructions. When the program or the instructions is or are executed by the processor, the chip is enabled to implement the method according to any one of the third aspect or the possible implementations of the third aspect.

According to a twenty-second aspect, an embodiment of this application provides a communication system. The system includes the apparatus according to the fourth aspect, the apparatus according to the fifth aspect, and/or the apparatus according to the sixth aspect, the system includes the apparatus according to the seventh aspect, the apparatus according to the eighth aspect, and/or the apparatus according to the ninth aspect, or the system includes the apparatus according to the tenth aspect, the apparatus according to the eleventh aspect, and/or the apparatus according to the twelfth aspect.

It may be understood that any communication apparatus, chip, computer-readable medium, computer program product, or communication system, or the like provided above is configured to perform a corresponding method provided above. Therefore, for beneficial effects that can be achieved by the communication apparatus, the chip, the computer-readable medium, the computer program product, the communication system, or the like, refer to beneficial effects in the corresponding method. Details are not described herein.

### BRIEF DESCRIPTION OF DRAWINGS

FIG. 1 is a schematic diagram of an architecture of a communication system according to an embodiment of this application;
FIG. 2 is a schematic diagram of a hardware structure of a communication apparatus according to an embodiment of this application;
FIG. 3 is a schematic flowchart 1 of a communication method according to an embodiment of this application;
FIG. 4(a), FIG. 4(b), and FIG. 4(c) each are a schematic diagram 1 of a bandwidth part of a first terminal device and a bandwidth part of a second terminal device according to an embodiment of this application;
FIG. 5 is a schematic flowchart 2 of a communication method according to an embodiment of this application;
FIG. 6 is a schematic diagram of a bandwidth part of a second terminal device according to an embodiment of this application;
FIG. 7 is a schematic flowchart 3 of a communication method according to an embodiment of this application;
FIG. 8 is a schematic flowchart 4 of a communication method according to an embodiment of this application;
FIG. 9(a), FIG. 9(b), and FIG. 9(c) each are a schematic diagram 2 of a bandwidth part of a first terminal device and a bandwidth part of a second terminal device according to an embodiment of this application;
FIG. 10 is a schematic diagram 1 of a structure of a communication apparatus according to an embodiment of this application;
FIG. 11 is a schematic diagram 2 of a structure of a communication apparatus according to an embodiment of this application;
FIG. 12 is a schematic diagram 3 of a structure of a communication apparatus according to an embodiment of this application; and
FIG. 13 is a schematic diagram of composition of a communication system according to an embodiment of this application.

### DESCRIPTION OF EMBODIMENTS

The following describes implementations of embodiments of this application in detail with reference to accompanying drawings.

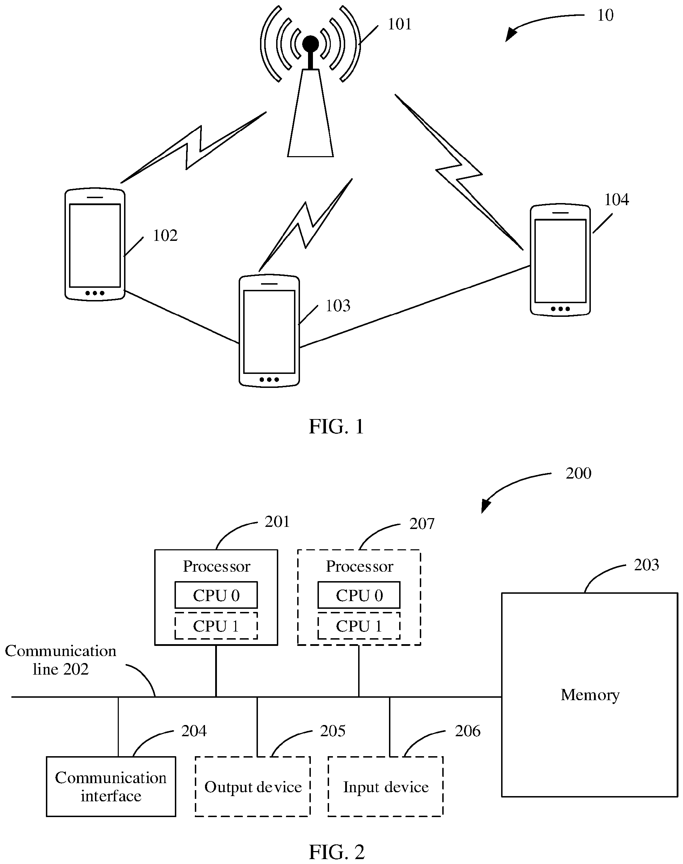

A method provided in embodiments of this application may be applied to various communication systems. For example, the communication systems may be a long term evolution (long term evolution, LTE) system, a 5th generation (5th generation, 5G) communication system, an NR system, a wireless fidelity (wireless fidelity, Wi-Fi) system, a communication system related to the 3rd generation partnership project (3rd generation partnership project, 3GPP), and a future evolved communication system. This is not limited. The following uses only a communication system 10 shown in FIG. 1 as an example to describe a method provided in embodiments of this application.

FIG. 1 is a schematic diagram of an architecture of the communication system 10 according to an embodiment of this application. In FIG. 1, the communication system 10 may include one or more network devices 101 (where only one network device 101 is shown) and a terminal device 102 to a terminal device 104 that can communicate with the network device 101. FIG. 1 is merely the schematic diagram, and does not constitute any limitation on a scenario to which the technical solutions provided in this application are applicable.

In FIG. 1, the network device may provide a wireless access service for a terminal device. Specifically, each network device corresponds to a service coverage area. A terminal device entering the area may communicate with the network device through a Uu interface, to receive a wireless access service provided by the network device. The terminal device and the network device may communicate with each other through a Uu interface link. Uu interface links may be classified into an uplink (uplink, UL) and a downlink (downlink, DL) based on directions of data transmission on the Uu interface links. Uplink data sent from the terminal device to the network device may be transmitted on the UL, and downlink data transmitted from the network device to the terminal device may be transmitted on the DL. For example, in FIG. 1, the terminal device 103 is located in a coverage area of the network device 101. The network device 101 may send downlink data to the terminal device 103 through a DL, and the terminal device 103 may send uplink data to the network device 101 through a UL.

A terminal device and another terminal device may communicate with each other through a direct communication link. The direct communication link between the terminal device and the another terminal device may be referred to as a sidelink or a sidelink (sidelink, SL). For example, the direct communication link between the terminal device and the another terminal device is the sidelink. In FIG. 1, the terminal device 102 and the terminal device 103 may communicate with each other through a sidelink, and the terminal device 104 and the terminal device 103 may communicate with each other through a sidelink.

The terminal devices in FIG. 1 may cooperate with each other, to improve reliability of receiving data by the terminal devices. For example, the terminal device 102 and the terminal device 103 cooperate with each other to improve reliability of receiving data 1 by the terminal device 103. The network device 101 sends the data 1 to the terminal device 102 and the terminal device 103. After receiving the data 1 from the network device 101, the terminal device 102 forwards the data 1 to the terminal device 103. The terminal device 103 receives the data 1 from the network device 101 and the data 1 from the terminal device 102. In this way, the reliability of receiving the data 1 by the terminal device 103 can be improved. The terminal devices that cooperate with each other may constitute a user cooperation group. For example, the terminal device 102 and the terminal device 103 may constitute a user cooperation group. Each user cooperation group corresponds to a group identifier of the user cooperation group, and the user cooperation group has a different group identifier. In the user cooperation group, a target receiving device (for example, the terminal device 103) of data may be referred to as a target user equipment (target user equipment, TUE), a target terminal device, a target terminal, or the like. This is not limited. In the user cooperation group, a terminal device (for example, the terminal device 102) that assists the TUE in receiving the data may be referred to as a cooperation user equipment (cooperation user equipment, CUE), a cooperation terminal device, a cooperation terminal, or the like. This is not limited.

It may be understood that a plurality of different user cooperation groups may exist in a same cell, and each user cooperation group may include one TUE and one or more CUEs. A TUE in a user cooperation group may be a CUE in another user cooperation group, and a CUE in the user cooperation group may also be a TUE in another user cooperation group. This is not limited.

The network device in FIG. 1, for example, the network device 101, may be any device having a wireless transceiver function. The network device includes but is not limited to: an evolved NodeB (NodeB or eNB or e-NodeB, evolutional Node B) in LTE, a gNodeB (gNodeB or gNB) or a transmission reception point (transmission receiving point/transmission reception point, TRP) in NR, a base station that subsequently evolves in 3GPP, an access node in a Wi-Fi system, a wireless relay node, a wireless backhaul node, or the like. The base station may be a macro base station, a micro base station, a picocell base station, a small cell, a relay station, a balloon station, or the like. A plurality of base stations may support the foregoing networks of a same technology, or may support the foregoing networks of different technologies. The base station may include one or more co-site or non-co-site TRPs. The network device may alternatively be a radio controller, a centralized unit (centralized unit, CU), and/or a distributed unit (distributed unit, DU) in a cloud radio access network (cloud radio access network, CRAN) scenario. The network device may alternatively be a server, a wearable device, a machine communication device, a vehicle-mounted device, or the like. That the network device is a base station is used as an example for description below. The plurality of network devices may be base stations of a same type, or may be base stations of different types. The base station may communicate with a terminal device, or may communicate with the terminal device through a relay station. The terminal device may communicate with a plurality of base stations using different technologies. For example, the terminal device may communicate with a base station supporting an LTE network, may communicate with a base station supporting a 5G network, or may further support dual connections to the base station in the LTE network and the base station in the 5G network.

The terminal device in FIG. 1, for example, the terminal device 102, the terminal device 103, or the terminal device 104, is a device having a wireless transceiver function, and may be deployed on land, where the deployment includes indoor, outdoor, handheld, wearable, or vehicle-mounted deployment; may be deployed on water (for example, on a ship); or may be deployed in air (for example, on an aerocraft, a balloon, and a satellite). The terminal device may be a mobile phone (mobile phone), a tablet computer (Pad), a computer with a wireless transceiver function, a virtual reality (virtual reality, VR) terminal device, an augmented reality (augmented reality, AR) terminal device, a terminal device in industrial control (industrial control), a vehicle-mounted terminal device, a terminal device in self driving (self driving), a terminal device in assisted driving, a terminal device in telemedicine (remote medical), a terminal device in a smart grid (smart grid), a terminal device in transportation safety (transportation safety), a terminal device in a smart city (smart city), a terminal device in a smart home (smart home), and the like. An application scenario is not limited in embodiments of this application. Sometimes, the terminal device may also be referred to as a terminal device, a user equipment (user equipment, UE), an access terminal device, a vehicle-mounted terminal device, an industrial control terminal device, a UE unit, a UE station, a mobile station, a remote station, a remote terminal device, a mobile device, a UE terminal device, a wireless communication device, a machine terminal device, a UE agent, a UE apparatus, or the like. The terminal device may be fixed or mobile.

The relay may be the network device, or may be the terminal device. This is not limited.

By way of example but not limitation, in this application, the terminal device may be a wearable device. The wearable device may also be referred to as a wearable intelligent device, and is a generic name of wearable devices developed by intelligently designing daily wear by using a wearable technology, for example, glasses, gloves, a watch, clothing, and shoes. The wearable device is a portable device that can be directly worn or integrated into clothes or an accessory of a user. The wearable device is more than a hardware device, and implements powerful functions through software support, data exchange, and cloud interaction. Generalized wearable intelligent devices include full-featured and large-size devices that can implement complete or partial functions without depending on smartphones, for example, smart watches or smart glasses, and devices that focus only on one type of application function and need to work with other devices such as smartphones, for example, various smart bands or smart jewelry for monitoring physical signs.

In this application, the terminal device may be a terminal device in an internet of things (internet of things, IoT) system. An IoT is an important component in development of future information technologies. A main technical feature of the IoT is to connect an object to a network by using a communication technology, to implement an intelligent network of human-machine interconnection and thing-thing interconnection. The terminal device in this application may be a terminal device in machine type communication (machine type communication, MTC). The terminal device in this application may be an in-vehicle module, an in-vehicle module, an onboard component, an automotive chip, or an on board unit that is built in a vehicle as one or more components or units. The vehicle may implement the method in this application by using the in-vehicle module, the in-vehicle module, the onboard component, the automotive chip, or the on board unit that is built in the vehicle. Therefore, embodiments of this application may be applied to an internet of vehicles, for example, vehicle to everything (vehicle to everything, V2X), long term evolution-vehicle (long term evolution-vehicle, LTE-V), and vehicle to vehicle (vehicle to vehicle, V2V).

The communication system 10 shown in FIG. 1 is merely used as an example, but is not intended to limit the technical solutions in this application. A person skilled in the art should understand that in a specific implementation process, the communication system 10 may further include another device, and a quantity of network devices and a quantity of terminal devices may alternatively be determined based on a specific requirement. This is not limited.

Optionally, each network element in FIG. 1 in this embodiment of this application, for example, the network device 101, the terminal device 102, the terminal device 103, or the terminal device 104, may be a functional module in an apparatus. It may be understood that the functional module may be an element in a hardware device, for example, a communication chip or a communication component in a terminal device or a network device, or may be a software functional module running on hardware or a virtualized function instantiated on a platform (for example, a cloud platform).

For example, the network element in FIG. 1 may be implemented by using a communication apparatus 200 in FIG. 2. FIG. 2 is a schematic diagram of a hardware structure of a communication apparatus that may be used in an embodiment of this application. The communication apparatus 200 may include at least one processor 201, a communication line 202, a memory 203, and at least one communication interface 204.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a path, for example, a bus, for transmitting information between the foregoing components.

The communication interface 204 is configured to communicate with another device or a communication network by using any transceiver-type apparatus, and is, for example, an Ethernet interface, a radio access network (radio access network, RAN) interface, or a wireless local area network (wireless local area network, WLAN) interface.

The memory 203 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the communication line 202. Alternatively, the memory may be integrated with the processor. The memory provided in this embodiment of this application may usually be non-volatile. The memory 203 is configured to store computer-executable instructions for executing the solutions in this application, and execution is controlled by the processor 201. The processor 201 is configured to execute the computer-executable instructions stored in the memory 203, to implement the method provided in embodiments of this application.

Optionally, computer-executable instructions in this embodiment of this application may also be referred to as application program code. This is not specifically limited in this embodiment of this application.

During specific implementation, in an embodiment, the processor 201 may include one or more CPUs, for example, a CPU 0 and a CPU 1 in FIG. 2.

During specific implementation, in an embodiment, the communication apparatus 200 may include a plurality of processors, for example, the processor 201 and a processor 207 in FIG. 2. Each of the processors may be a single-core (single-CPU) processor, or may be a multi-core (multi-CPU) processor. The processor herein may refer to one or more devices, circuits, and/or processing cores configured to process data (for example, computer program instructions).

During specific implementation, in an embodiment, the communication apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive an input from a user in a plurality of manners. For example, the input device 206 may be a mouse, a keyboard, a touchscreen device, or a sensor device.

During specific implementation, the communication apparatus 200 may be a desktop computer, a portable computer, a network server, a personal digital assistant (personal digital assistant, PDA), a mobile phone, a tablet computer, a wireless terminal device, an embedded device, or a device having a structure similar to that in FIG. 2. A type of the communication apparatus 200 is not limited in this embodiment of this application.

The following specifically describes the communication method in embodiments of this application with reference to FIG. 1 and FIG. 2. Network elements in the following embodiments may have the components shown in FIG. 2.

It should be noted that names of messages between the network elements, names of parameters in the messages, or the like in the following embodiments of this application are merely examples, and there may alternatively be other names during specific implementation. This is not specifically limited in embodiments of this application.

It may be understood that, in embodiments of this application, a first terminal device, a second terminal device, or a network device may perform some or all of steps in embodiments of this application. The steps are merely examples. In embodiments of this application, other steps or variations of various steps may be further performed. In addition, the steps may be performed in a sequence different from a sequence presented in embodiments of this application, and not all steps in embodiments of this application may need to be performed.

A resource in this application may also be referred to as a physical resource, a transmission resource, or the like. The physical resource may include a time domain resource and/or a frequency domain resource. For example, the time domain resource included in the resource may include at least one frame, at least one sub-frame (sub-frame), at least one slot (slot), at least one mini-slot (mini-slot), at least one time unit, or at least one time domain symbol. For example, the frequency domain resource included in the resource may include at least one carrier (carrier), at least one component carrier (component carrier, CC), at least one bandwidth part (bandwidth part, BWP), at least one resource block group (resource block group, RBG), at least one physical resource block group (physical resource-block group, PRG), at least one resource block (resource block, RB), or at least one sub-carrier (sub-carrier, SC).

It may be understood that the physical resource may be a physical resource of a baseband, and the physical resource of the baseband may be used by a baseband chip. Alternatively, the physical resource may be a physical resource of an air interface. Alternatively, the physical resource may be a physical resource of an intermediate frequency or a radio frequency.

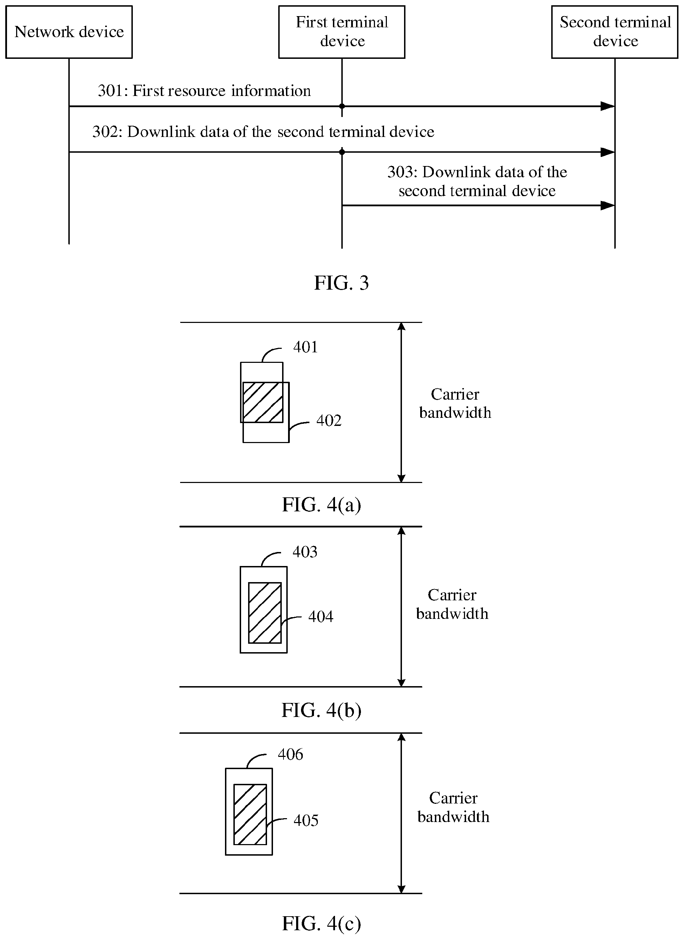

FIG. 3 shows a communication method according to an embodiment of this application. The communication method includes step 301 to step 303.

Step 301: A network device sends first resource information to a first terminal device and a second terminal device.

The network device may be the network device 101 in FIG. 1, or may be a component in the network device 101 in FIG. 1. For example, the network device may be a processor in the network device 101, a chip in the network device 101, or a chip system in the network device 101. This is not limited.

The first terminal device may be any CUE in FIG. 1, or may be a component in the CUE. For example, the first terminal device may be a processor in the CUE, a chip in the CUE, or a chip system in the CUE. This is not limited.

The second terminal device may be the TUE in FIG. 1 in a same user cooperation group as the first terminal device, or may be a component in the TUE. For example, the second terminal device may be a processor in the TUE, a chip in the TUE, or a chip system in the TUE. This is not limited.

The first resource information is used to indicate a resource for downlink data of the second terminal device. The resource for the downlink data of the second terminal device is included in an overlapping bandwidth part (bandwidth part, BWP) of the first terminal device and the second terminal device. A BWP is a physical resource block set, and the physical resource block set is a subset of a common resource block of a given numerology (numerology) on a given carrier.

A BWP of the first terminal device and a BWP of the second terminal device may be shown in FIG. 4(a), FIG. 4(b), and FIG. 4(c). In FIG. 4(a), an area 401 is the BWP of the second terminal device, an area 402 is the BWP of the first terminal device, and the resource for the downlink data of the second terminal device is in an overlapping part of the area 401 and the area 402. In FIG. 4(b), an area 403 is a BWP of the second terminal device, an area 404 is a BWP of the first terminal device, the BWP of the second terminal device includes the BWP of the first terminal device, and the resource for the downlink data of the second terminal device is in an overlapping part of the area 403 and the area 404. That is, the resource for the downlink data of the second terminal device is in the area 404. In FIG. 4(c), an area 405 is a BWP of the second terminal device, an area 406 is a BWP of the first terminal device, the BWP of the first terminal device includes the BWP of the second terminal device, and the resource for the downlink data of the second terminal device is in an overlapping part of the area 405 and the area 406. That is, the resource for the downlink data of the second terminal device is in the area 405.

It may be understood that position relationships between the BWP of the first terminal device and the BWP of the second terminal device shown in FIG. 4(a), FIG. 4(b), and FIG. 4(c) are merely examples. There may alternatively be another position relationship between the BWP of the first terminal device and the BWP of the second terminal device. This is not limited.

Optionally, the BWP of the first terminal device and/or the BWP of the second terminal device may be predefined, or may be configured by the network device for the first terminal device and/or the second terminal device.

It may be understood that, to enable the first terminal device and the second terminal device to have an overlapping BWP, when configuring the BWPs for the first terminal device and the second terminal device, the network device may configure, for the first terminal device and the second terminal device, BWPs having an overlapping part; or when the BWPs of the first terminal device and the second terminal device are predefined, BWPs having an overlapping part may be predefined for the first terminal device and the second terminal device.

Optionally, the network device or the second terminal device selects a CUE for the second terminal device. For example, when it is determined that the second terminal device is a TUE, the network device selects the CUE for the second terminal device, and notifies the second terminal device of the selected CUE. For example, when the network device determines to send data to the second terminal device, the network device selects a first terminal device with a good signal as the CUE, and sends an identifier of the first terminal device to the second terminal device. For example, when it is determined that the second terminal device is a TUE, the second terminal device selects the CUE for the second terminal device, and notifies the network device of the selected CUE. For example, when the network device determines to send data to the second terminal device, the second terminal device selects a first terminal device close to the second terminal device as the CUE, and sends an identifier of the first terminal device to the network device.

Correspondingly, on a first terminal device side, the first terminal device receives the first resource information from the network device. On a second terminal device side, the second terminal device receives the first resource information from the network device.

Step 302: The network device sends the downlink data of the second terminal device to the first terminal device and the second terminal device based on the first resource information.

Optionally, the network device sends the downlink data of the second terminal device to the first terminal device and the second terminal device on the resource that is for the downlink data of the second terminal device and that is indicated by the first resource information.

Optionally, that the network device sends the downlink data of the second terminal device to the first terminal device and the second terminal device may alternatively be described as that the network device sends a downlink data channel of the second terminal device to the first terminal device and the second terminal device. The downlink data channel of the second terminal device is used to carry the downlink data of the second terminal device. The downlink data channel of the second terminal device may be a physical downlink shared channel (physical downlink shared channel, PDSCH) of the second terminal device. The resource for the downlink data of the second terminal device may alternatively be described as a resource for the PDSCH of the second terminal device, a transmission resource for the PDSCH of the second terminal device, a resource for transmitting the PDSCH of the second terminal device, or the like. This is not limited.

Correspondingly, on the first terminal device side, the first terminal device receives the downlink data of the second terminal device from the network device based on the first resource information. For example, the first terminal device receives the downlink data of the second terminal device from the network device on the resource that is for the downlink data of the second terminal device and that is indicated by the first resource information.

That the first terminal device receives the downlink data of the second terminal device from the network device may alternatively be described as that the first terminal device receives the downlink data channel of the second terminal device from the network device. The downlink data channel of the second terminal device may be the PDSCH of the second terminal device.

Correspondingly, on the second terminal device side, the second terminal device receives the downlink data of the second terminal device from the network device based on the first resource information. For example, the second terminal device receives the downlink data of the second terminal device from the network device on the resource that is for the downlink data of the second terminal device and that is indicated by the first resource information.

That the second terminal device receives the downlink data of the second terminal device from the network device may alternatively be described as that the second terminal device receives the downlink data channel of the second terminal device from the network device. The downlink data channel of the second terminal device may be the PDSCH of the second terminal device.

Step 303: The first terminal device sends the downlink data of the second terminal device to the second terminal device.

Optionally, the first terminal device sends the downlink data of the second terminal device to the second terminal device on a sidelink resource. The sidelink resource may be configured by the network device for the first terminal device and the second terminal device, or the sidelink resource may be predefined. This is not limited.

That the first terminal device sends the downlink data of the second terminal device to the second terminal device may alternatively be described as that the first terminal device sends a sidelink data channel to the second terminal device. The sidelink data channel is used to carry the downlink data of the second terminal device. The sidelink data channel may be a physical sidelink shared channel (physical sidelink shared channel, PSSCH), or may be another data channel, for example, a data channel on an unlicensed spectrum. This is not limited.

Correspondingly, on the second terminal device side, the second terminal device receives the downlink data of the second terminal device from the first terminal device. For example, the second terminal device receives the downlink data of the second terminal device from the first terminal device on the sidelink resource.

That the second terminal device receives the downlink data of the second terminal device from the first terminal device may alternatively be described as that the second terminal device receives the sidelink data channel from the first terminal device.

It may be understood that, after receiving the downlink data of the second terminal device from the first terminal device and the downlink data of the second terminal device from the network device, the second terminal device may decode the downlink data that is of the second terminal device and that is received from the first terminal device, may decode the downlink data that is of the second terminal device and that is received from the network device, or may decode the downlink data of the second terminal device from the first terminal device and the downlink data of the second terminal device from the network device. This is not limited.

Based on the method shown in FIG. 3, the network device may send first resource information to the first terminal device and the second terminal device, and send the downlink data of the second terminal device to the first terminal device and the second terminal device based on the first resource information. After receiving the first resource information, the first terminal device and the second terminal device may receive the downlink data of the second terminal device from the network device based on the first resource information. The first terminal device may further forward the downlink data of the second terminal device to the second terminal device. In this way, after sending the first resource information to the first terminal device and the second terminal device, the network device may send the downlink data of the second terminal device to the first terminal device and the second terminal device once on the resource indicated by the first resource information. Because the first resource information is information used to indicate the resource for the downlink data of the second terminal device, overheads of sending the first resource information by the network device are far less than overheads of sending the downlink data of the second terminal device by the network device. Therefore, compared with a method in which the network device separately sends the downlink data of the second terminal device to the first terminal device and the second terminal device, the method reduces overheads of the network device.

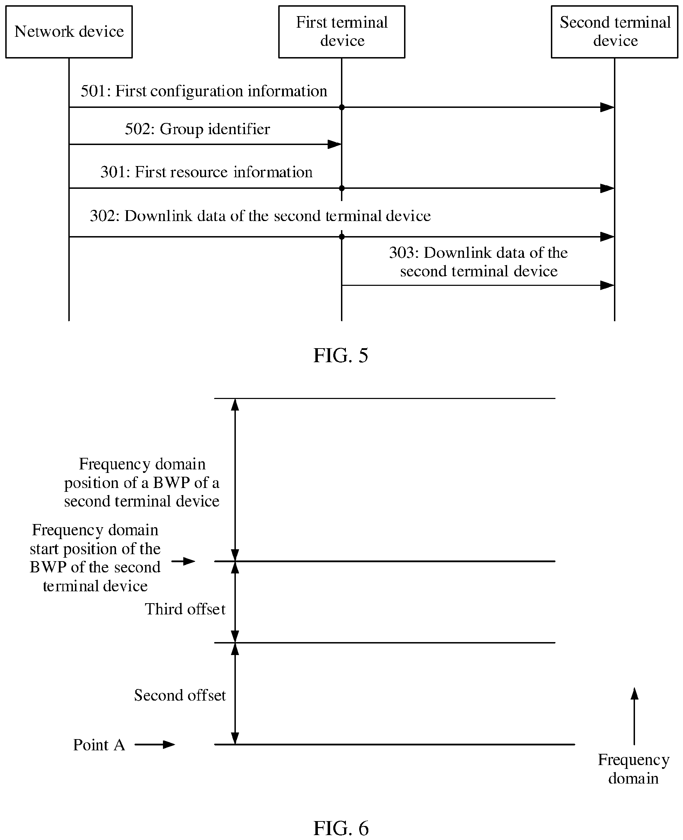

Further, optionally, in a first implementation of the method shown in FIG. 3, the network device may send a resource for downlink control information of the second terminal device to the first terminal device and the second terminal device, so that the first terminal device and the second terminal device receive the downlink control information of the second terminal device from the network device on the resource for the downlink control information of the second terminal device. Specifically, as shown in FIG. 5, the method shown in FIG. 3 further includes optional steps 501 and 502.

Step 501: The network device sends first configuration information to the first terminal device and the second terminal device.

The first configuration information is used to indicate the resource for the downlink control information of the second terminal device. The first configuration information may include a configuration of the BWP of the second terminal device, a configuration of a control resource set (control resource set, CORESET) of the second terminal device, and a configuration of search space of the second terminal device.

The configuration of the BWP of the second terminal device may be used to indicate a frequency domain position of the BWP of the second terminal device. For example, the configuration of the BWP of the second terminal device may include a frequency domain position of a common reference point (point A), a second offset, and a first resource indicator value (resource indicator value, RIV). The second offset may be an offset of a lowest resource block (resource block, RB) of a virtual carrier of the second terminal device relative to the frequency domain position of the point A. The first RIV may be used to indicate a third offset and a quantity of RBs in the BWP of the second terminal device. The third offset is an offset of a starting RB of the BWP of the second terminal device relative to the lowest RB of the virtual carrier of the second terminal device. For example, a relationship among the frequency domain position of the BWP of the second terminal device, the frequency domain position of the point A, the second offset, and the third offset may be shown in FIG. 6. A frequency domain start position of the BWP of the second terminal device may be determined based on the frequency domain position of the point A, the second offset, and the third offset. The frequency domain position of the BWP of the second terminal device may be determined based on the frequency domain start position of the BWP of the second terminal device and the quantity of RBs in the BWP of the second terminal device. The virtual carrier (virtual carrier) of the second terminal device may also be referred to as a logical carrier of the second terminal device, a specific carrier of the second terminal device, an available RB of the second terminal device, available bandwidth of the second terminal device, and the like. The second terminal device may determine a resource grid (resource grid) and an orthogonal frequency division multiplexing (orthogonal frequency division multiplexing, OFDM) baseband signal, place a radio frequency (radio frequency, RF) receiver, and/or perform filtering based on the virtual carrier of the second terminal device.

The configuration of the CORESET of the second terminal device may be used to indicate a position of the resource for the downlink control information of the second terminal device in the BWP of the second terminal device. For example, the configuration of the CORESET of the second terminal device may include a bit sequence. The bit sequence is used to indicate the position of the resource for the downlink control information of the second terminal device in the BWP of the second terminal device. For example, there is a correspondence between the bit sequence and the RBs in the BWP of the second terminal device. If an i^{th} bit in the bit sequence is 1, an RB corresponding to the i^{th} bit may be used to transmit the downlink control information of the second terminal device, where i is an integer greater than or equal to 0. The configuration of the CORESET of the second terminal device may be further used to indicate a quantity of symbols occupied by the downlink control information of the second terminal device in time domain. For example, the configuration of the CORESET of the second terminal device may further include the quantity of symbols occupied by the downlink control information of the second terminal device in time domain.

The configuration of the search space of the second terminal device may be used to indicate the second terminal device to blindly detect a set of an aggregation level (aggregation level, AL) and a control channel element (control channel element, CCE) resource position of a physical downlink control channel (physical downlink control channel, PDCCH) that are of the second terminal device. For example, the configuration of the search space of the second terminal device may include the set of the AL and the CCE resource position that are of the PDCCH of the second terminal device.

Optionally, that a network device sends first resource information to a first terminal device and a second terminal device in step 301 includes: The network device sends the first resource information to the first terminal device and the second terminal device on the resource for the downlink control information of the second terminal device. The first resource information includes the downlink control information of the second terminal device. The downlink control information of the second terminal device is used to indicate the resource for the downlink data of the second terminal device. The downlink control information of the second terminal device may be carried on the PDCCH of the second terminal device. The resource for the downlink control information of the second terminal device may also be referred to as a transmission resource for the downlink control information of the second terminal device, a resource for transmitting the downlink control information of the second terminal device, a resource for the PDCCH of the second terminal device, a transmission resource for the PDCCH of the second terminal device, or a resource for transmitting the PDCCH of the second terminal device. This is not limited.

Optionally, the downlink control information of the second terminal device includes a resource allocation field and a modulation and coding scheme (modulation and coding scheme, MCS) field. The resource allocation field is used to indicate the resource for the downlink data of the second terminal device, and the MCS field is used to indicate an MCS for the downlink data of the second terminal device.

Optionally, that the network device sends the downlink control information of the second terminal device to the first terminal device and the second terminal device includes: The network device scrambles the downlink control information of the second terminal device by using a group identifier, and sends the scrambled downlink control information of the second terminal device to the first terminal device and the second terminal device.

The group identifier may be an identifier of a user cooperation group. The user cooperation group may include the first terminal device and the second terminal device. The group identifier may be used to descramble the downlink control information received by the first terminal device. The group identifier may be configured by the network device, or may be an identifier of the second terminal device. This is not limited.

Correspondingly, on the first terminal device side, the first terminal device receives the first configuration information from the network device, and determines the resource for the downlink control information of the second terminal device based on the first configuration information. Subsequently, the first terminal device may receive the downlink control information of the second terminal device from the network device on the resource for the downlink control information of the second terminal device.

Optionally, that the first terminal device receives the first resource information from the network device includes: The first terminal device receives the first resource information from the network device on the resource for the downlink control information of the second terminal device. The first resource information includes the downlink control information of the second terminal device.

Correspondingly, on the second terminal device side, the second terminal device receives the first configuration information from the network device, and determines the resource for the downlink control information of the second terminal device based on the first configuration information. Subsequently, the second terminal device may receive the downlink control information of the second terminal device from the network device on the resource for the downlink control information of the second terminal device.

Optionally, that the second terminal device receives the first resource information from the network device includes: The second terminal device receives the first resource information from the network device on the resource for the downlink control information of the second terminal device. The first resource information includes the downlink control information of the second terminal device.

Step 502: The network device sends the group identifier to the first terminal device.

It may be understood that step 502 only needs to be performed before the first terminal device descrambles the downlink control information received by the first terminal device. A sequence of performing step 502 in the method shown in FIG. 5 is not limited in this embodiment of this application. For example, step 502 may be performed after step 501, or step 502 may be performed before step 501. This is not limited.

Correspondingly, on the first terminal device side, the first terminal device receives the group identifier from the network device. Subsequently, the first terminal device may descramble, based on the group identifier, the downlink control information received by the first terminal device. If the downlink control information is successfully descrambled, the first terminal device forwards, to the second terminal device, the downlink data received based on the downlink control information.

Based on the method shown in FIG. 5, the network device may send the first configuration information to the first terminal device and the second terminal device. After receiving the first configuration information from the network device, the first terminal device and the second terminal device may determine the resource for the downlink control information of the second terminal device based on the first configuration information, and receive the downlink control information of the second terminal device from the network device on the resource for the downlink control information of the second terminal device. In this way, when the network device sends the downlink control information of the second terminal device once on the resource for the downlink control information of the second terminal device, both the first terminal device and the second terminal device can receive the downlink control information. This reduces the overheads of the network device.

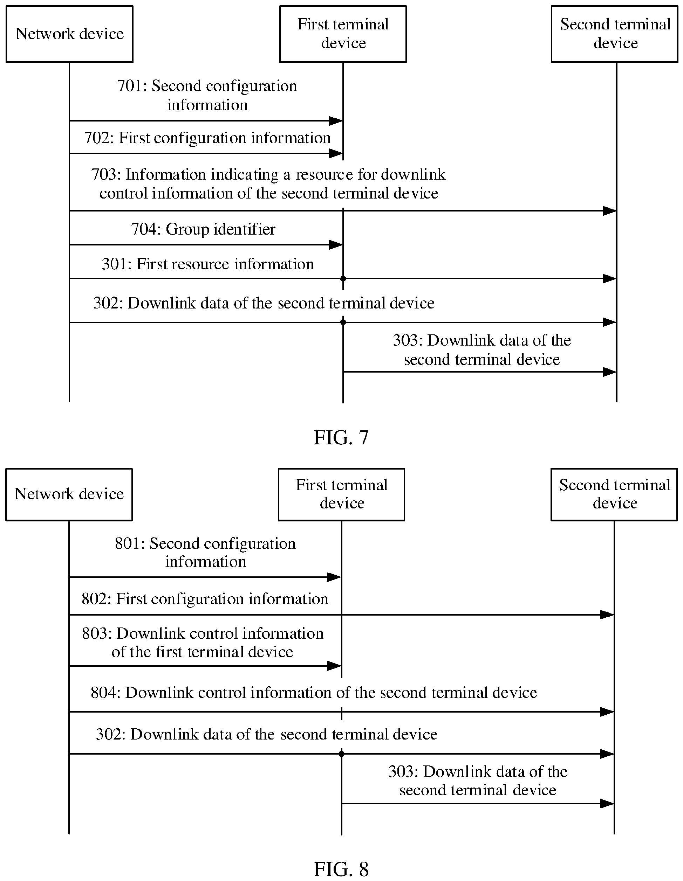

Further, optionally, in a second implementation of the method shown in FIG. 3, the network device may send a resource for downlink control information of the first terminal device to the first terminal device, and indicate a resource for downlink control information of the second terminal device to the first terminal device by using the resource for the downlink control information of the first terminal device, so that the first terminal device receives the downlink control information of the second terminal device from the network device on the resource for the downlink control information of the second terminal device. Specifically, as shown in FIG. 7, the method shown in FIG. 3 further includes optional steps 701 to 704.

Step 701: The network device sends second configuration information to the first terminal device.

The second configuration information may be used to indicate the resource for the downlink control information of the first terminal device. The second configuration information may include a configuration of the BWP of the first terminal device and a configuration of a CORESET of the first terminal device.

The configuration of the BWP of the first terminal device may be used to indicate a frequency domain position of the BWP of the first terminal device. For example, the configuration of the BWP of the first terminal device may include a frequency domain position of a common reference point (point A), a fourth offset, and a second RIV. The fourth offset may be an offset of a lowest RB of a virtual carrier of the first terminal device relative to the frequency domain position of the point A. The second RIV may be used to indicate a fifth offset and a quantity of RBs in the BWP of the first terminal device. The fifth offset is an offset of a starting RB of the BWP of the first terminal device relative to the lowest RB of the virtual carrier of the first terminal device. The virtual carrier of the first terminal device may also be referred to as a logical carrier of the first terminal device, a specific carrier of the first terminal device, an available RB of the first terminal device, available bandwidth of the first terminal device, and the like. The first terminal device may determine a resource grid and an OFDM baseband signal, place an RF transceiver, and/or perform filtering based on the virtual carrier of the first terminal device.

The configuration of the CORESET of the first terminal device may be used to indicate a position of the resource for the downlink control information of the first terminal device in the BWP of the first terminal device. For example, the configuration of the CORESET of the first terminal device may include a bit sequence. The bit sequence is used to indicate the position of the resource for the downlink control information of the first terminal device in the BWP of the first terminal device. For example, there is a correspondence between the bit sequence and the RBs in the BWP of the first terminal device. If a j^{th} bit in the bit sequence is 1, an RB corresponding to the j^{th} bit may be used to transmit the downlink control information of the first terminal device, where j is an integer greater than or equal to 0. The configuration of the CORESET of the first terminal device may be further used to indicate a quantity of symbols occupied by the downlink control information of the first terminal device in time domain. For example, the configuration of the CORESET of the first terminal device may further include the quantity of symbols occupied by the downlink control information of the first terminal device in time domain.

Optionally, the second configuration information further includes a configuration of search space of the first terminal device.

The configuration of the search space of the first terminal device may be used to indicate the first terminal device to blindly detect a set of an AL and a CCE resource position that are of a PDCCH of the first terminal device. For example, the configuration of the search space of the first terminal device may include the set of the AL and the CCE resource position that are of the PDCCH of the first terminal device.

Correspondingly, on the first terminal device side, the first terminal device receives the second configuration information from the network device.

Step 702: The network device sends first configuration information to the first terminal device.

The first configuration information may be used to indicate the resource for the downlink control information of the second terminal device. For descriptions of the first configuration information, refer to a case 1 to a case 3 below.

Case 1: The first configuration information includes a first offset, a configuration of a CORESET of the second terminal device, and a configuration of search space of the second terminal device.

The first offset is used to indicate an offset of a configuration of the BWP of the second terminal device relative to the configuration of the BWP of the first terminal device. Subsequently, the first terminal device may determine the configuration of the BWP of the second terminal device based on the configuration of the BWP of the first terminal device and the first offset.

For descriptions of the configuration of the CORESET of the second terminal device and the configuration of the search space of the second terminal device in the case 1, refer to the corresponding descriptions in step 501 above. Details are not described again.

Case 2: The first configuration information includes a configuration of the BWP of the second terminal device, a sixth offset, and a configuration of search space of the second terminal device.

The sixth offset is used to indicate an offset of a configuration of a CORESET of the second terminal device relative to the configuration of the CORESET of the first terminal device. Subsequently, the first terminal device may determine the configuration of the CORESET of the second terminal device based on the configuration of the CORESET of the first terminal device and a second offset.

For descriptions of the configuration of the BWP of the second terminal device and the configuration of the search space of the second terminal device in the case 2, refer to the corresponding descriptions in step 501 above. Details are not described again.

Case 3: The first configuration information includes a first offset, a sixth offset, and a configuration of search space of the second terminal device.

For descriptions of the first offset in the case 3, refer to the descriptions in the case 1 above. For descriptions of the sixth offset in the case 3, refer to the descriptions in the case 2 above. For descriptions of the configuration of the search space of the second terminal device in the case 3, refer to the corresponding descriptions in step 501 above. Details are not described again.

Correspondingly, on the first terminal device side, the first terminal device receives the first configuration information from the network device. Subsequently, the first terminal device may determine, based on the first configuration information and the second configuration information, an overlapping resource of the resource for the downlink control information of the second terminal device and the downlink control information of the first terminal device, so that the first terminal device receives the downlink control information of the second terminal device from the network device on the overlapping resource of the resource for the downlink control information of the second terminal device and the downlink control information of the first terminal device.

Step 703: The network device sends, to the second terminal device, information indicating the resource for the downlink control information of the second terminal device.

The information indicating the resource for the downlink control information of the second terminal device may include the configuration of the BWP of the second terminal device, the configuration of the CORESET of the second terminal device, and the configuration of the search space of the second terminal device. For descriptions of the configuration of the BWP of the second terminal device, the configuration of the CORESET of the second terminal device, and the configuration of the search space of the second terminal device, refer to the corresponding descriptions in step 501 above. Details are not described again.

Optionally, the resource for the downlink control information of the first terminal device overlaps with the resource for the downlink control information of the second terminal device.

Optionally, that a network device sends first resource information to a first terminal device and a second terminal device in step 301 includes: The network device sends the first resource information to the first terminal device and the second terminal device on the overlapping resource of the resource for the downlink control information of the second terminal device and the downlink control information of the first terminal device. The first resource information includes the downlink control information of the second terminal device.

Optionally, the downlink control information of the second terminal device includes a resource allocation field and a modulation and coding scheme MCS field. The resource allocation field is used to indicate the resource for the downlink data of the second terminal device, and the MCS field is used to indicate an MCS for the downlink data of the second terminal device.

Optionally, that the network device sends the downlink control information of the second terminal device to the first terminal device and the second terminal device includes: The network device scrambles the downlink control information of the second terminal device by using a group identifier, and sends the scrambled downlink control information of the second terminal device to the first terminal device and the second terminal device.

The group identifier may be an identifier of a user cooperation group. The user cooperation group may include the first terminal device and the second terminal device. The group identifier may be used to descramble the downlink control information received by the first terminal device. The group identifier may be configured by the network device, or may be an identifier of the second terminal device. This is not limited.

Correspondingly, on the second terminal device side, the second terminal device receives, from the network device, the information indicating the resource for the downlink control information of the second terminal device. Subsequently, the second terminal device may determine the resource for the downlink control information of the second terminal device based on the information indicating the resource for the downlink control information of the second terminal device, and receive the downlink control information of the second terminal device from the network device on the resource for the downlink control information of the second terminal device.

Step 704: The network device sends the group identifier to the first terminal device.

It may be understood that step 704 only needs to be performed before the first terminal device descrambles the downlink control information received by the first terminal device. A sequence of performing step 704 in the method shown in FIG. 7 is not limited in this embodiment of this application. For example, step 704 may be performed after step 703, step 704 may be performed before step 701, step 704 may be performed before step 702, or step 704 may be performed before step 703. This is not limited.

Correspondingly, on the first terminal device side, the first terminal device receives the group identifier from the network device. Subsequently, the first terminal device may descramble, based on the group identifier, the downlink control information received by the first terminal device. If the downlink control information is successfully descrambled, the first terminal device forwards, to the second terminal device, the downlink data received based on the downlink control information.

Based on the method shown in FIG. 7, the network device may send the first configuration information and the second configuration information to the first terminal device, and send the downlink control information of the second terminal device to the first terminal device and the second terminal device on the overlapping resource of the resource for the downlink control information of the second terminal device and the downlink control information of the first terminal device. In this way, when the network device sends the downlink control information of the second terminal device once on the overlapping resource of the resource for the downlink control information of the second terminal device and the downlink control information of the first terminal device, both the first terminal device and the second terminal device can receive the downlink control information. This reduces the overheads of the network device.

Further, optionally, in a third implementation of the method shown in FIG. 3, the network device may indicate, in downlink control information sent to the first terminal device, the resource for the downlink data of the second terminal device, so that the first terminal device receives the downlink data of the second terminal device from the network device on the resource for the downlink data of the second terminal device. Specifically, as shown in FIG. 8, the method shown in FIG. 3 further includes optional steps 801 and 802.

Step 801: The network device sends second configuration information to the first terminal device.

For specific descriptions of step 801, refer to the descriptions in step 701 above. Details are not described again.

Step 802: The network device sends first configuration information to the second terminal device.

For specific descriptions of step 802, refer to the corresponding descriptions in step 501 above. Details are not described again.

Optionally, step 301 may be replaced with step 803 and step 804.

Step 803: The network device sends the downlink control information of the first terminal device to the first terminal device on a resource for the downlink control information of the first terminal device.

The downlink control information of the first terminal device is used to indicate the resource for the downlink data of the second terminal device. For example, the downlink control information of the first terminal device includes a resource allocation field and an MCS field. The resource allocation field represents the resource obtained by indexing the downlink data of the second terminal device by using a start position of the BWP of the first terminal device. For example, the resource allocation field includes a seventh offset. The seventh offset is used to indicate an offset of the resource for the downlink data of the second terminal device relative to the start position of the BWP of the first terminal device. The MCS field is used to indicate an MCS of downlink data of the first terminal device. The downlink control information of the first terminal device may be carried on a PDCCH of the first terminal device. The resource for the downlink control information of the first terminal device may also be referred to as a transmission resource for the downlink control information of the first terminal device, a resource for transmitting the downlink control information of the first terminal device, a resource for the PDCCH of the first terminal device, a transmission resource for the PDCCH of the first terminal device, or a resource for transmitting the PDCCH of the first terminal device. This is not limited.

Optionally, when the downlink control information of the first terminal device is used to indicate the resource for the downlink data of the second terminal device, the resource allocation field included in the downlink control information of the first terminal device is further used to indicate the first terminal device to forward, to the second terminal device, the downlink data received based on the downlink control information of the first terminal device.

Correspondingly, on the first terminal device side, the first terminal device receives the downlink control information of the first terminal device from the network device on the resource for the downlink control information of the first terminal device.

Step 804: The network device sends downlink control information of the second terminal device to the second terminal device on a resource for the downlink control information of the second terminal device.

The downlink control information of the second terminal device is used to indicate the resource for the downlink data of the second terminal device. The downlink control information of the second terminal device may be carried on a PDCCH of the second terminal device. The resource for the downlink control information of the second terminal device may also be referred to as a transmission resource for the downlink control information of the second terminal device, a resource for transmitting the downlink control information of the second terminal device, a resource for the PDCCH of the second terminal device, a transmission resource for the PDCCH of the second terminal device, or a resource for transmitting the PDCCH of the second terminal device. This is not limited.

Optionally, the downlink control information of the second terminal device includes a resource allocation field and an MCS field. The resource allocation field is used to indicate the resource for the downlink data of the second terminal device, and the MCS field is used to indicate an MCS for the downlink data of the second terminal device.

Optionally, the resource for the downlink control information of the first terminal device does not overlap with the resource for the downlink control information of the second terminal device.

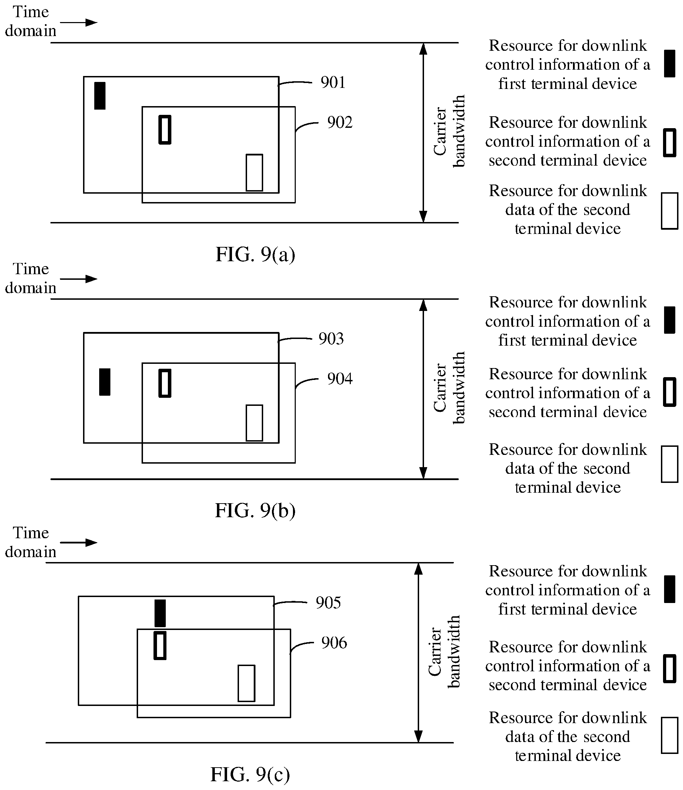

With reference to FIG. 9(a), FIG. 9(b), and FIG. 9(c), the following describes cases in which the resource for the downlink control information of the first terminal device does not overlap with the resource for the downlink control information of the second terminal device. For details, refer to descriptions in an example 1 to an example 3 below.

Example 1: As shown in FIG. 9(a), an area 901 is the BWP of the first terminal device, and an area 902 is the BWP of the second terminal device. In FIG. 9(a), a time domain resource for the downlink control information of the first terminal device is different from a time domain resource for the downlink control information of the second terminal device, and a frequency domain resource for the downlink control information of the first terminal device is also different from a frequency domain resource for the downlink control information of the second terminal device. The resource for the downlink data of the second terminal device is in an overlapping part of the area 901 and the area 902. That is, the resource for the downlink data of the second terminal device is in the overlapping BWP of the first terminal device and the second terminal device.

Example 2: As shown in FIG. 9(b), an area 903 is the BWP of the first terminal device, and an area 904 is the BWP of the second terminal device. In FIG. 9(b), a time domain resource for the downlink control information of the first terminal device is different from a time domain resource for the downlink control information of the second terminal device, and a frequency domain resource for the downlink control information of the first terminal device is the same as a frequency domain resource for the downlink control information of the second terminal device. The resource for the downlink data of the second terminal device is in an overlapping part of the area 903 and the area 904. That is, the resource for the downlink data of the second terminal device is in the overlapping BWP of the first terminal device and the second terminal device.

Example 3: As shown in FIG. 9(c), an area 905 is the BWP of the first terminal device, and an area 906 is the BWP of the second terminal device. In FIG. 9(c), a time domain resource for the downlink control information of the first terminal device is the same as a time domain resource for the downlink control information of the second terminal device, and a frequency domain resource for the downlink control information of the first terminal device is different from a frequency domain resource for the downlink control information of the second terminal device. The resource for the downlink data of the second terminal device is in an overlapping part of the area 905 and the area 906. That is, the resource for the downlink data of the second terminal device is in the overlapping BWP of the first terminal device and the second terminal device.

Correspondingly, on the second terminal device side, the second terminal device receives the downlink control information of the second terminal device from the network device on the resource for the downlink control information of the second terminal device.

Based on the method shown in FIG. 8, the network device may indicate, in the control information that is of the first terminal device and that is sent to the first terminal device, the resource for the downlink data of the second terminal device, so that the first terminal device determines the resource for the downlink data of the second terminal device based on the downlink control information of the first terminal device. Subsequently, when the network device may send the resource for the downlink data of the second terminal device once on the resource for the downlink data of the second terminal device, both the first terminal device and the second terminal device can receive the downlink data. This reduces the overheads of the network device.

The foregoing mainly describes the solutions provided in embodiments of this application from a perspective of interaction between the network elements. It may be understood that, to implement the foregoing functions, the first terminal device, the second terminal device, or the network device includes corresponding hardware structures and/or software modules for performing the functions. A person skilled in the art should be easily aware that, in combination with units and algorithm operations of the examples described in embodiments disclosed in this specification, this application can be implemented by hardware or a combination of the hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional modules may be performed on the first terminal device, the second terminal device, or the network device based on the foregoing method examples. For example, functional modules may be obtained through division corresponding to functions, or two or more functions may be integrated in one processing module. The integrated module may be implemented in a form of hardware, or may be implemented in a form of a software functional module. It may be understood that, in embodiments of this application, division into the modules is an example, and is merely logical function division. Another division manner may be used during actual implementation.

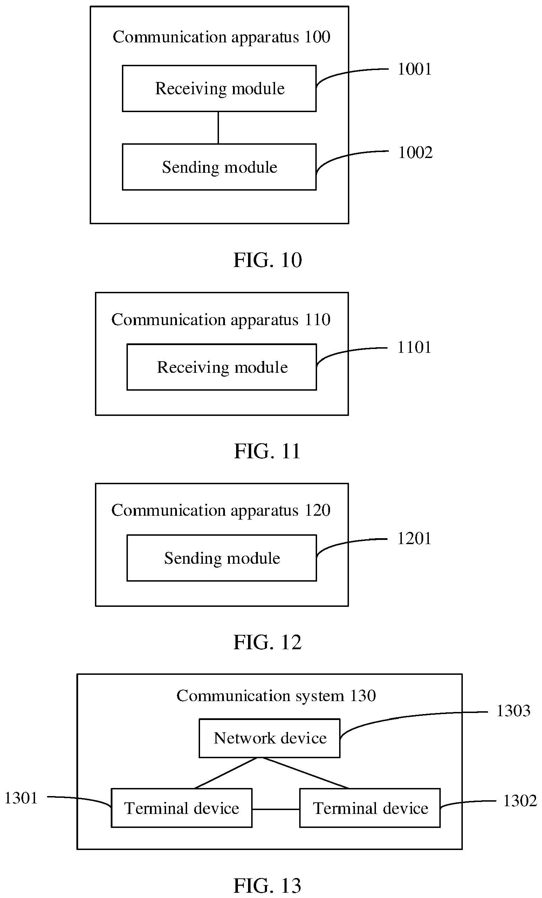

For example, when the functional modules are obtained through division in an integrated manner, FIG. 10 is a schematic diagram of a structure of a communication apparatus 100. The communication apparatus 100 may be a first terminal device, or a chip or a system-on-a-chip in the first terminal device. The communication apparatus 100 may be configured to perform functions of the first terminal device in the foregoing embodiments.

In a possible implementation, the communication apparatus 100 shown in FIG. 10 includes a receiving module 1001 and a sending module 1002.

The receiving module 1001 is configured to receive first resource information from a network device, where the first resource information is used to indicate a resource for downlink data of a second terminal device, and the resource for the downlink data of the second terminal device is included in an overlapping bandwidth part of the communication apparatus 100 and the second terminal device.

The receiving module 1001 is further configured to receive the downlink data of the second terminal device from the network device based on the first resource information.

The sending module 1002 is configured to send the downlink data to the second terminal device.

Optionally, the receiving module 1001 is further configured to receive first configuration information from the network device, where the first configuration information is used to indicate a resource for downlink control information of the second terminal device. The receiving module 1001 is specifically configured to receive first resource information of the second terminal device from the network device on the resource for the downlink control information of the second terminal device, where the first resource information includes the downlink control information of the second terminal device.

Optionally, the receiving module 1001 is further configured to receive second configuration information from the network device, where the second configuration information is used to indicate a resource for downlink control information of the communication apparatus 100, and the resource for the downlink control information of the communication apparatus 100 overlaps with the resource for the downlink control information of the second terminal device. The receiving module 1001 is further specifically configured to receive the first resource information from the network device on an overlapping resource of the resource for the downlink control information of the second terminal device and the downlink control information of the communication apparatus 100.

Optionally, the second configuration information includes a configuration of a bandwidth part of the communication apparatus 100; and the first configuration information includes a first offset and a configuration of a control resource set of the second terminal device, where the first offset is used to indicate an offset of a configuration of a bandwidth part of the second terminal device relative to the configuration of the bandwidth part of the communication apparatus 100.

Optionally, the first configuration information includes a configuration of a bandwidth part of the second terminal device and a configuration of a control resource set of the second terminal device.

Optionally, the receiving module 1001 is further configured to receive second configuration information from the network device, where the second configuration information is used to indicate a resource for downlink control information of the communication apparatus 100. The receiving module 1001 is further specifically configured to receive the first resource information from the network device on the resource for the downlink control information of the communication apparatus 100, where the first resource information includes the downlink control information of the communication apparatus 100, and the downlink control information of the communication apparatus 100 is used to indicate the resource for the downlink data of the second terminal device.

Optionally, the resource for the downlink control information of the communication apparatus 100 does not overlap with a resource for a downlink control information of the second terminal device.

Optionally, the receiving module 1001 is further configured to receive a group identifier from the network device, where the group identifier is used to descramble the downlink control information received by the communication apparatus 100. The sending module 1002 is specifically configured to send the downlink data to the second terminal device if the communication apparatus 100 successfully descrambles the downlink control information of the second terminal device based on the group identifier.

All related content of the operations in the foregoing method embodiments may be cited in function descriptions of the corresponding functional modules. Details are not described herein again.

In this embodiment, the communication apparatus 100 is presented in a form of functional modules obtained through division in an integrated manner. The "module" herein may be a specified ASIC, a circuit, a processor and a memory that execute one or more software or firmware programs, an integrated logic circuit, and/or another component that can provide the foregoing functions. In a simple embodiment, a person skilled in the art may figure out that the communication apparatus 100 may be in the form shown in FIG. 2.

For example, the processor 201 in FIG. 2 may invoke the computer-executable instructions stored in the memory 203, to enable the communication apparatus 100 to perform the communication methods in the foregoing method embodiments.

For example, functions/implementation processes of the receiving module 1001 and the sending module 1002 in FIG. 10 may be implemented by using the processor 201 in FIG. 2 invoking the computer-executable instructions stored in the memory 203, or functions/implementation processes of the receiving module 1001 and the sending module 1002 in FIG. 10 may be implemented by using the communication interface 204 in FIG. 2.

The communication apparatus 100 provided in this embodiment may perform the foregoing communication methods. Therefore, for technical effects that can be obtained by the communication apparatus 100, refer to the foregoing method embodiments. Details are not described herein again.

For example, when the functional modules are obtained through division in an integrated manner, FIG. 11 is a schematic diagram of a structure of a communication apparatus 110. The communication apparatus 110 may be a second terminal device, or a chip or a system-on-a-chip in the second terminal device. The communication apparatus 110 may be configured to perform functions of the second terminal device in the foregoing embodiments.

In a possible implementation, the communication apparatus 110 shown in FIG. 11 includes a receiving module 1101.

The receiving module 1101 is configured to receive first resource information from a network device, where the first resource information is used to indicate a resource for downlink data of the communication apparatus 110, and the resource for the downlink data of the communication apparatus 110 is included in an overlapping bandwidth part of a first terminal device and the communication apparatus 110.

The receiving module 1101 is further configured to receive the downlink data of the communication apparatus 110 from the network device based on the first resource information.

The receiving module 1101 is further configured to receive the downlink data from the first terminal device.

Optionally, the receiving module 1101 is further configured to receive first configuration information from the network device, where the first configuration information is used to indicate a resource for downlink control information of the communication apparatus 110. The receiving module 1101 is specifically configured to receive the first resource information from the network device on the resource for the downlink control information of the communication apparatus 110, where the first resource information includes the downlink control information of the communication apparatus 110.

All related content of the operations in the foregoing method embodiments may be cited in function descriptions of the corresponding functional modules. Details are not described herein again.

In this embodiment, the communication apparatus 110 is presented in a form of functional modules obtained through division in an integrated manner. The "module" herein may be a specified ASIC, a circuit, a processor and a memory that execute one or more software or firmware programs, an integrated logic circuit, and/or another component that can provide the foregoing functions. In a simple embodiment, a person skilled in the art may figure out that the communication apparatus 110 may be in the form shown in FIG. 2.

For example, the processor 201 in FIG. 2 may invoke the computer-executable instructions stored in the memory 203, to enable the communication apparatus 110 to perform the communication methods in the foregoing method embodiments.

For example, functions/implementation processes of the receiving module 1101 in FIG. 11 may be implemented by using the processor 201 in FIG. 2 invoking the computer-executable instructions stored in the memory 203, or functions/implementation processes of the receiving module 1101 in FIG. 11 may be implemented by using the communication interface 204 in FIG. 2.

The communication apparatus 110 provided in this embodiment may perform the foregoing communication methods. Therefore, for technical effects that can be obtained by the apparatus, refer to the foregoing method embodiments. Details are not described herein again.

For example, when the functional modules are obtained through division in an integrated manner, FIG. 12 is a schematic diagram of a structure of a communication apparatus 120. The communication apparatus 120 may be a network device, or a chip or a system-on-a-chip in the network device. The communication apparatus 120 may be configured to perform functions of the network device in the foregoing embodiments.

In a possible implementation, the communication apparatus 120 shown in FIG. 12 includes a sending module 1201.

The sending module 1201 is configured to send first resource information to a first terminal device and a second terminal device, where the first resource information is used to indicate a resource for downlink data of the second terminal device, and the resource for the downlink data of the second terminal device is included in an overlapping bandwidth part of the first terminal device and the second terminal device.

The sending module 1201 is further configured to send the downlink data of the second terminal device to the first terminal device and the second terminal device based on the first resource information.

Optionally, the sending module 1201 is further configured to send first configuration information to the first terminal device and the second terminal device, where the first configuration information is used to indicate a resource for downlink control information of the second terminal device. The sending module 1201 is specifically configured to send the first resource information to the first terminal device and the second terminal device on the resource for the downlink control information of the second terminal device, where the first resource information includes the downlink control information of the second terminal device.

Optionally, the sending module 1201 is further configured to send second configuration information to the first terminal device, where the second configuration information is used to indicate a resource for downlink control information of the first terminal device, and the resource for the downlink control information of the first terminal device overlaps with the resource for the downlink control information of the second terminal device. The sending module 1201 is further specifically configured to send the first resource information to the first terminal device and the second terminal device on an overlapping resource of the resource for the downlink control information of the second terminal device and the downlink control information of the first terminal device.

Optionally, the second configuration information includes a configuration of a bandwidth part of the first terminal device; and the first configuration information includes a first offset and a configuration of a control resource set of the second terminal device, where the first offset is used to indicate an offset of a configuration of a bandwidth part of the second terminal device relative to the configuration of the bandwidth part of the first terminal device.

Optionally, the first configuration information includes a configuration of a bandwidth part of the second terminal device and a configuration of a control resource set of the second terminal device.

Optionally, the sending module 1201 is further configured to send second configuration information to the first terminal device, where the second configuration information is used to indicate a resource for downlink control information of the first terminal device. The sending module 1201 is further specifically configured to send the first resource information to the first terminal device on the resource for the downlink control information of the first terminal device, where the first resource information includes the downlink control information of the first terminal device, and the downlink control information of the first terminal device is used to indicate the resource for the downlink data of the second terminal device.

Optionally, the sending module 1201 is further configured to send first configuration information to the second terminal device, where the first configuration information is used to indicate a resource for downlink control information of the second terminal device. The sending module 1201 is further specifically configured to send the first resource information to the second terminal device on the resource for the downlink control information of the second terminal device, where the first resource information includes the downlink control information of the second terminal device.

Optionally, the resource for the downlink control information of the first terminal device does not overlap with the resource for the downlink control information of the second terminal device.

Optionally, the sending module 1201 is further configured to send a group identifier to the first terminal device, where the group identifier is used to descramble the downlink control information received by the first terminal device.

All related content of the operations in the foregoing method embodiments may be cited in function descriptions of the corresponding functional modules. Details are not described herein again.

In this embodiment, the communication apparatus 120 is presented in a form of functional modules obtained through division in an integrated manner. The "module" herein may be a specified ASIC, a circuit, a processor and a memory that execute one or more software or firmware programs, an integrated logic circuit, and/or another component that can provide the foregoing functions. In a simple embodiment, a person skilled in the art may figure out that the communication apparatus 120 may be in the form shown in FIG. 2.

For example, the processor 201 in FIG. 2 may invoke the computer-executable instructions stored in the memory 203, to enable the communication apparatus 120 to perform the communication methods in the foregoing method embodiments.

For example, functions/implementation processes of the sending module 1201 in FIG. 12 may be implemented by using the processor 201 in FIG. 2 invoking the computer-executable instructions stored in the memory 203, or functions/implementation processes of the sending module 1201 in FIG. 12 may be implemented by using the communication interface 204 in FIG. 2.

The communication apparatus 120 provided in this embodiment may perform the foregoing communication methods. Therefore, for technical effects that can be obtained by the communication apparatus 120, refer to the foregoing method embodiments. Details are not described herein again.

FIG. 13 is a schematic diagram of composition of a communication system. As shown in FIG. 13, the communication system 130 may include a terminal device 1301, a terminal device 1302, and a network device 1303. It may be understood that FIG. 13 is merely an example of an accompanying drawing. Network elements included in the communication system 130 shown in FIG. 13 and a quantity of the network elements are not limited in this embodiment of this application.

The terminal device 1301 has a function of the communication apparatus 100 shown in FIG. 10, may receive first resource information from the network device 1303, receive downlink data of the terminal device 1302 from the network device 1303 based on the first resource information, and send the downlink data to the terminal device 1302.

The terminal device 1302 has a function of the communication apparatus 110 shown in FIG. 11, may receive the first resource information from the network device 1303, receive the downlink data of the terminal device 1302 from the network device 1303 based on the first resource information, and receive the downlink data from the terminal device 1301.

The network device 1303 has a function of the communication apparatus 120 shown in FIG. 12, may send the first resource information to the terminal device 1301 and the terminal device 1302, and send the downlink data of the terminal device 1302 to the terminal device 1301 and the terminal device 1302 based on the first resource information.

It may be understood that all related content of the steps in the foregoing method embodiments may be cited in function descriptions of the corresponding network elements in the communication system 130. Details are not described herein again.

Through the foregoing descriptions of the implementations, a person skilled in the art may clearly understand that, for the purpose of convenient and brief description, only division into the foregoing functional modules is used as an example for description. During actual application, the foregoing functions may be allocated to different functional modules and implemented based on a requirement. That is, an inner structure of an apparatus is divided into different functional modules to implement all or some of the functions described above.

In the several embodiments provided in this application, it should be understood that the disclosed apparatuses and methods may be implemented in other manners. For example, the foregoing apparatus embodiment is merely an example. For example, division into the modules or units is merely logical function division. During actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces, and the indirect couplings or communication connections between apparatuses or units may be implemented in an electrical form, a mechanical form, or another form.

The units described as separate components may or may not be physically separated, and components displayed as units may be one or more physical units. That is, the units may be located in one place, or may be distributed on different places. Some or all of the units may be selected based on an actual requirement to implement the objectives of the solutions of embodiments.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the prior art, or all or a part of the technical solutions may be implemented in a form of a software product. The software product is stored in a storage medium and includes several instructions for instructing a device (which may be a single-chip microcomputer, a chip, or the like) or a processor (processor) to perform all or a part of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
receiving, by a first terminal device, first resource information from a network device, wherein the first resource information is used to indicate a resource for downlink data of a second terminal device, and the resource for the downlink data of the second terminal device is comprised in an overlapping bandwidth part of the first terminal device and the second terminal device;
receiving, by the first terminal device, the downlink data of the second terminal device from the network device based on the first resource information; and
sending, by the first terminal device, the downlink data to the second terminal device.

2. The method according to claim 1, wherein the method further comprises:
receiving, by the first terminal device, first configuration information from the network device, wherein the first configuration information is used to indicate a resource for downlink control information of the second terminal device; and
the receiving, by a first terminal device, first resource information from a network device comprises:
receiving, by the first terminal device, first resource information of the second terminal device from the network device on the resource for the downlink control information of the second terminal device, wherein the first resource information comprises the downlink control information of the second terminal device.

3. The method according to claim 2, wherein the method further comprises:
receiving, by the first terminal device, second configuration information from the network device, wherein the second configuration information is used to indicate a resource for downlink control information of the first terminal device, and the resource for the downlink control information of the first terminal device overlaps with the resource for the downlink control information of the second terminal device; and
the receiving, by the first terminal device, first resource information of the second terminal device from the network device on the resource for the downlink control information of the second terminal device comprises:
receiving, by the first terminal device, the first resource information from the network device on an overlapping resource of the resource for the downlink control information of the second terminal device and the downlink control information of the first terminal device.

4. The method according to claim 3, wherein
the second configuration information comprises a configuration of a bandwidth part of the first terminal device; and
the first configuration information comprises a first offset and a configuration of a control resource set of the second terminal device, wherein the first offset is used to indicate an offset of a configuration of a bandwidth part of the second terminal device relative to the configuration of the bandwidth part of the first terminal device.

5. The method according to claim 2, wherein
the first configuration information comprises a configuration of a bandwidth part of the second terminal device and a configuration of a control resource set of the second terminal device.

6. The method according to claim 1, wherein the method further comprises:
receiving, by the first terminal device, second configuration information from the network device, wherein the second configuration information is used to indicate a resource for downlink control information of the first terminal device; and
the receiving, by a first terminal device, first resource information from a network device comprises:
receiving, by the first terminal device, the first resource information from the network device on the resource for the downlink control information of the first terminal device, wherein the first resource information comprises the downlink control information of the first terminal device, and the downlink control information of the first terminal device is used to indicate the resource for the downlink data of the second terminal device.

7. The method according to claim 6, wherein the resource for the downlink control information of the first terminal device does not overlap with a resource for a downlink control information of the second terminal device.

8. The method according to any one of claims 1 to 5, wherein the method further comprises:
receiving, by the first terminal device, a group identifier from the network device, wherein the group identifier is used to descramble the downlink control information received by the first terminal device; and
the sending, by the first terminal device, the downlink data to the second terminal device comprises:
sending, by the first terminal device, the downlink data to the second terminal device if the first terminal device successfully descrambles the downlink control information of the second terminal device based on the group identifier.

9. A communication method, wherein the method comprises:
receiving, by a second terminal device, first resource information from a network device, wherein the first resource information is used to indicate a resource for downlink data of the second terminal device, and the resource for the downlink data of the second terminal device is comprised in an overlapping bandwidth part of a first terminal device and the second terminal device;
receiving, by the second terminal device, the downlink data of the second terminal device from the network device based on the first resource information; and
receiving, by the second terminal device, the downlink data from the first terminal device.

10. The method according to claim 9, wherein the method further comprises:
receiving, by the second terminal device, first configuration information from the network device, wherein the first configuration information is used to indicate a resource for downlink control information of the second terminal device; and
the receiving, by a second terminal device, first resource information from a network device comprises:
receiving, by the second terminal device, the first resource information from the network device on the resource for the downlink control information of the second terminal device, wherein the first resource information comprises the downlink control information of the second terminal device.

11. A communication method, wherein the method comprises:
sending, by a network device, first resource information to a first terminal device and a second terminal device, wherein the first resource information is used to indicate a resource for downlink data of the second terminal device, and the resource for the downlink data of the second terminal device is comprised in an overlapping bandwidth part of the first terminal device and the second terminal device; and
sending, by the network device, the downlink data of the second terminal device to the first terminal device and the second terminal device based on the first resource information.

12. The method according to claim 11, wherein the method further comprises:
sending, by the network device, first configuration information to the first terminal device and the second terminal device, wherein the first configuration information is used to indicate a resource for downlink control information of the second terminal device; and
the sending, by a network device, first resource information to a first terminal device and a second terminal device comprises:
sending, by the network device, the first resource information to the first terminal device and the second terminal device on the resource for the downlink control information of the second terminal device, wherein the first resource information comprises the downlink control information of the second terminal device.

13. The method according to claim 12, wherein the method further comprises:
sending, by the network device, second configuration information to the first terminal device, wherein the second configuration information is used to indicate a resource for downlink control information of the first terminal device, and the resource for the downlink control information of the first terminal device overlaps with the resource for the downlink control information of the second terminal device; and
the sending, by the network device, the first resource information to the first terminal device and the second terminal device on the resource for the downlink control information of the second terminal device comprises:
sending, by the network device, the first resource information to the first terminal device and the second terminal device on an overlapping resource of the resource for the downlink control information of the second terminal device and the downlink control information of the first terminal device.

14. The method according to claim 13, wherein
the second configuration information comprises a configuration of a bandwidth part of the first terminal device; and
the first configuration information comprises a first offset and a configuration of a control resource set of the second terminal device, wherein the first offset is used to indicate an offset of a configuration of a bandwidth part of the second terminal device relative to the configuration of the bandwidth part of the first terminal device.

15. The method according to claim 12, wherein
the first configuration information comprises a configuration of a bandwidth part of the second terminal device and a configuration of a control resource set of the second terminal device.

16. The method according to claim 11, wherein the method further comprises:
sending, by the network device, second configuration information to the first terminal device, wherein the second configuration information is used to indicate a resource for downlink control information of the first terminal device; and
the sending, by a network device, first resource information to a first terminal device comprises:
sending, by the network device, the first resource information to the first terminal device on the resource for the downlink control information of the first terminal device, wherein the first resource information comprises the downlink control information of the first terminal device, and the downlink control information of the first terminal device is used to indicate the resource for the downlink data of the second terminal device.

17. The method according to claim 11, wherein the method further comprises:
sending, by the network device, first configuration information to the second terminal device, wherein the first configuration information is used to indicate a resource for downlink control information of the second terminal device; and
the sending, by a network device, first resource information to a second terminal device comprises:
sending, by the network device, the first resource information to the second terminal device on the resource for the downlink control information of the second terminal device, wherein the first resource information comprises the downlink control information of the second terminal device.

18. The method according to claim 16 or 17, wherein the resource for the downlink control information of the first terminal device does not overlap with the resource for the downlink control information of the second terminal device.

19. The method according to any one of claims 11 to 15, wherein the method further comprises:
sending, by the network device, a group identifier to the first terminal device, wherein the group identifier is used to descramble the downlink control information received by the first terminal device.

20. A communication apparatus, wherein the apparatus is configured to perform the method according to any one of claims 1 to 8, the method according to claim 9 or 10, or the method according to any one of claims 11 to 19.

21. A communication apparatus, comprising a processor, wherein the processor is coupled to a memory, and the memory is configured to store a program or instructions; and when the program or the instructions is or are executed by the processor, the apparatus is enabled to perform the method according to any one of claims 1 to 8, perform the method according to claim 9 or 10, or perform the method according to any one of claims 11 to 19.

22. A computer-readable medium, storing a computer program or instructions, wherein when the computer program or the instructions is or are executed, a computer is enabled to perform the method according to any one of claims 1 to 8, the method according to claim 9 or 10, or the method according to any one of claims 11 to 19.

23. A computer program product, wherein the computer program product comprises computer program code; and when the computer program code is run on a computer, the computer is enabled to implement the method according to any one of claims 1 to 8, implement the method according to claim 9 or 10, or implement the method according to any one of claims 11 to 19.

24. A chip, comprising a processor, wherein the processor is coupled to a memory, and the memory is configured to store a program or instructions; and when the program or the instructions is or are executed by the processor, the chip is enabled to perform the method according to any one of claims 1 to 8, the method according to claim 9 or 10, or the method according to any one of claims 11 to 19.
